# EUROPEAN PATENT SPECIFICATION

(11) **EP 4 362 179 B1**
(45) Date of publication and mention of the grant of the patent: **01.07.2026**
(21) Application number: 22887615.7
(22) Date of filing: 26.10.2022
(51) Int. Cl.: H01M 10/48, H01M 50/559, H01M 10/42, H01M 50/107, H01M 50/112, H01M 50/152, H01M 50/247, H01M 50/531, H04M 1/02, H01M 50/119, H01M 50/529

(54) **ELECTRONIC DEVICE COMPRISING RING-SHAPED BATTERY**
ELEKTRONISCHE VORRICHTUNG MIT RINGFÖRMIGER BATTERIE
DISPOSITIF ÉLECTRONIQUE COMPRENANT UNE BATTERIE EN FORME D'ANNEAU

(30) Priority: 26.10.2021 KR 20210143947
(43) Date of publication of application: 01.05.2024
(73) Proprietor: Samsung Electronics Co., Ltd., Suwon-si, Gyeonggi-do 16677 (KR)
(72) Inventor: JEON, Yongsub, Suwon-si Gyeonggi-do 16677 (KR); LEE, Sukhyun, Suwon-si Gyeonggi-do 16677 (KR); KIM, Myeongho, Suwon-si Gyeonggi-do 16677 (KR); KIM, Hyogon, Suwon-si Gyeonggi-do 16677 (KR); LEE, Seongil, Suwon-si Gyeonggi-do 16677 (KR); JANG, Wonjea, Suwon-si Gyeonggi-do 16677 (KR); HEO, Changryong, Suwon-si Gyeonggi-do 16677 (KR)
(74) Representative: Gulde & Partner
(86) International application number: PCT/KR2022/016490
(87) International publication number: WO 2023/075419

(56) References cited:
- CN-A- 106 684 497
- KR-A- 20110 081 142
- KR-A- 20150 116 732
- KR-A- 20150 116 732
- KR-A- 20160 107 168
- KR-A- 20170 019 332
- KR-A- 20170 019 332

## Description

### [Technical Field]

Various embodiments of the disclosure relate to an electronic device including a ring-shaped battery.

### [Background Art]

Electronic devices may refer to device configured to perform specific functions according to installed programs, such as home appliances, electronic wallets, portable multimedia players, mobile communication terminals, tablet PCs, video/audio devices, desktop/laptop computers, and vehicle navigation systems. For example, such electronic devices may output stored information as characters, sounds and/or images. In line with the high degree of integration of electronic devices and the widespread use of super-fast large-capacity wireless communication, it has recently become possible to equip a single electronic device with various functions. For example, not only a communication function, but also an entertainment function (for example, gaming), a multimedia function (for example, music/video playback), communication and security functions for mobile banking and the like, a scheduling function, and an electronic wallet function may be integrated into a single electronic device.

Recently, various form factors of terminals have been developed in line with commercialization of mobile terminals. Devices such as wearable devices, for example, interwork with mobile terminals (for example, smartphones) and provide users with various user experiences and useful functions. Smart rings are ring-type mobile electronic devices, which interwork with smartphones and provide various functions (for example, health care, alarm). The availability and functionality (for example, screen mounting) of such small devices have increased, thereby gradually increasing the needs for long-time use after one-time charging. Methods for designing large-capacity batteries have been studied in view of such needs, and technologies for securing the maximum capacity within the limited size and for providing more efficient connection structures have been reviewed.

### [Detailed Description of the Invention]

### [Technical Problem]

In general, pouch-type batteries are applied to ring-shaped electronic devices (for example, smart rings), and according to such a pouch-type battery connection structure, a flexible printed circuit board (for example, flexible PCB (FPCB)) is drawn out and connected to a main board (for example, hard PCB) of a ring-shaped electronic device through a connector. The outside of the battery may include a part obtained by applying a polyurethane-based coating, which has strong adhesiveness, waterproofing, and corrosion resistance, to a side sealing portion, such that the ring-shaped electronic device can be waterproof in daily life. The current structure makes it inevitable to apply such a part in connection with equipping a super-small device (for example, ring-shaped electronic device) with a battery, and this may place a restriction on maximizing the battery capacity inside the electronic device.

Problems to be solved by the disclosure are not limited to the above-mentioned problems, and may be variously expanded without deviating from the idea and scope of the disclosure.

### [Technical Solution]

Various embodiments of the disclosure may provide a ring-shaped (e.g., an annular-shaped) battery having a space which may include a circuit unit, and a ring-shaped electronic device including the ring-shaped battery. Problems to be solved by the disclosure are not limited to the above-mentioned problems, and may be variously expanded without deviating from the idea and scope of the disclosure.

According to various embodiments of the disclosure, a battery includes a ring-shaped battery case. The battery case includes a plurality of spaces physically separated by a plurality of partition walls, and an electrode assembly having a structure formed by stacking a plurality of electrode plates accommodated in at least one space of the plurality of spaces of the battery case, wherein the electrode assembly includes electrode tabs drawn out through at least one of the plurality of partition walls along one surface inside the battery case into a second space adjacent to at least the first space in which the electrode assembly is accommodated.

According to various embodiments of the disclosure, an electronic device includes a ring-shaped battery case, an electrode assembly formed by stacking a plurality of electrode plates, and a circuit unit. The battery case includes, among a plurality of spaces physically separated by a plurality of partition walls, a first space in which the electrode assembly is accommodated, and a second space in which the circuit unit is accommodated, and the electrode assembly is electrically connected to the circuit unit through electrode tabs drawn out into the second space through at least one of the plurality of partition walls along one surface inside battery case.

### [Advantageous Effects]

According to various embodiments of the disclosure, the shape and size of spaces in which an electrode assembly and a circuit unit can be disposed inside a ring-shaped battery included in an electronic device may be formed as needed, thereby maximizing the battery capacity of the ring-shaped electronic device. In addition, an electronic device according to various embodiments of the disclosure can have an optimized disposition space by drawing out and disposing electrode tabs to a place desired by a circuit portion along the inside of a battery case of a ring-shaped battery, and implementing a power line (e.g., provided by a power contact unit).

### [Brief Description of Drawings]

FIG. 1 is a block diagram of an electronic device in a network environment, according to various embodiments of the disclosure;
FIG. 2 illustrates a ring-shaped battery case according to various embodiments of the disclosure;
FIG. 3A illustrates a battery including an electrode assembly disposed inside the battery case of FIG. 2, according to various embodiments of the disclosure;
FIG. 3B is a sectional view taken along line A-A' of one side of the battery of FIG. 3A, according to various embodiments of the disclosure;
FIG. 3C is a sectional view taken along line B-B' of one side of the battery of FIG. 3A, according to various embodiments of the disclosure;
FIG. 4A illustrates a battery including an electrode assembly disposed inside the battery case of FIG. 2, according to other embodiments of the disclosure;
FIG. 4B is a sectional view taken along line C-C' of one side of the battery of FIG. 4A, according to various embodiments of the disclosure;
FIG. 4C is a sectional view taken along line D-D' of one side of the battery of FIG. 4A, according to various embodiments of the disclosure;
FIG. 5 illustrates a battery including electrode tabs drawn out from the electrode assembly of FIG. 3A, according to various embodiments of the disclosure;
FIG. 6 illustrates a battery including electrode tabs drawn out from the electrode assembly of FIG. 3A, according to other embodiments of the disclosure;
FIG. 7 illustrates a battery including electrode tabs drawn out from the electrode assembly of FIG. 3A, according to still other embodiments of the disclosure;
FIG. 8 illustrates a battery including electrode tabs drawn out from the electrode assembly of FIG. 3A, according to still other embodiments of the disclosure;
FIG. 9 illustrates a battery including electrode tabs drawn out from the electrode assembly of FIG. 3A, according to still other embodiments of the disclosure;
FIG. 10 illustrates a battery including electrode tabs drawn out from the electrode assembly of FIG. 3A, according to still other embodiments of the disclosure;
FIG. 11 illustrates a battery including electrode tabs drawn out from the electrode assembly of FIG. 4A, according to various embodiments of the disclosure;
FIG. 12 illustrates a battery including electrode tabs drawn out from the electrode assembly of FIG. 4A, according to still other embodiments of the disclosure;
FIG. 13 illustrates a battery including electrode tabs drawn out from the electrode assembly of FIG. 4A, according to still other embodiments of the disclosure;
FIG. 14 illustrates a battery including electrode tabs drawn out from the electrode assembly of FIG. 4A, according to still other embodiments of the disclosure;
FIG. 15 illustrates a battery including electrode tabs drawn out from the electrode assembly of FIG. 4A, according to still other embodiments of the disclosure;
FIG. 16 illustrates a battery including electrode tabs drawn out from the electrode assembly of FIG. 4A, according to still other embodiments of the disclosure;
FIG. 17 illustrates the battery of FIGS. 5 to 16 thermally sealed with a cap, according to various embodiments of the disclosure;
FIG. 18 illustrates a ring-shaped electronic device including a circuit unit in the battery of FIG. 17, according to various embodiments of the disclosure;
FIG. 19A illustrates an example of a battery included in a ring-shaped electronic device according to various embodiments of the disclosure;
FIG. 19B is a perspective view of an electrode assembly disposed inside the battery case of FIG. 19A, according to various embodiments of the disclosure;
FIG. 19C is a perspective view of an electrode assembly disposed inside the battery case of FIG. 19A, according to still other embodiments of the disclosure;
FIG. 20A illustrates another example of a battery included in a ring-shaped electronic device according to various embodiments of the disclosure;
FIG. 20B is a perspective view of an electrode assembly disposed inside the battery case of FIG. 20A, according to various embodiments of the disclosure; and
FIG. 20C is a perspective view of an electrode assembly disposed inside the battery case of FIG. 20A, according to still other embodiments of the disclosure.

### [Mode for Carrying out the Invention]

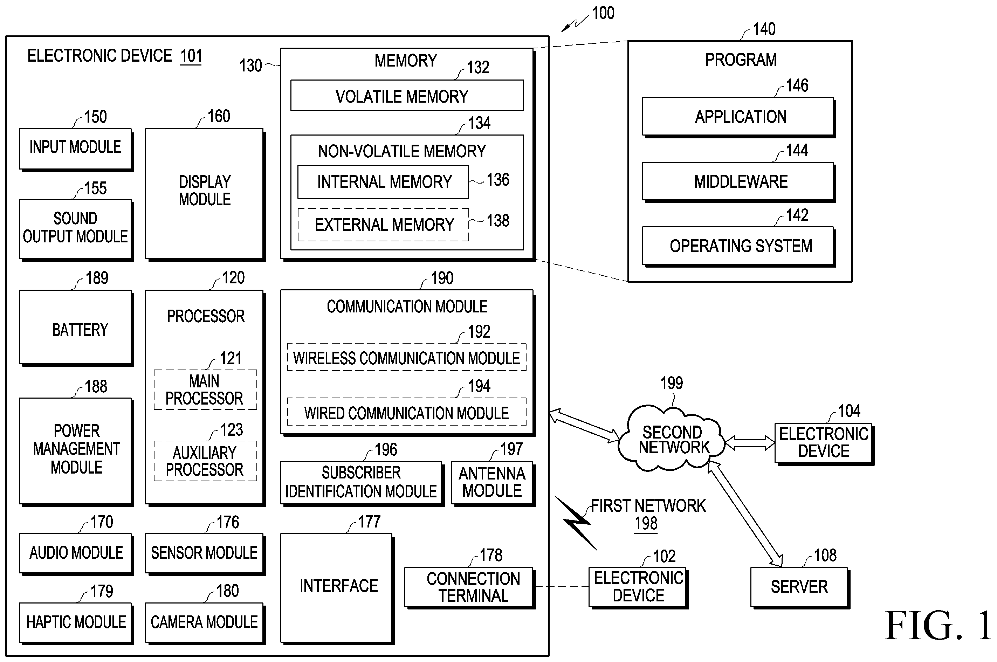

FIG. 1 is a block diagram illustrating an electronic device in a network environment according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more external devices of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

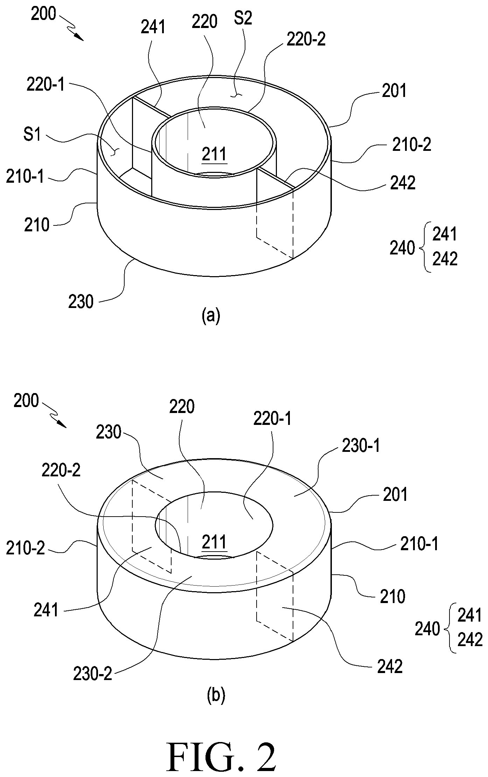

FIG. 2 illustrates a battery case 201 according to various embodiments of the disclosure. The battery case 201 includes, for example, a ring-shaped (e.g., an annular-shaped) battery 200. FIG. 2A illustrates the front surface of the battery case 201 and FIG. 2B illustrates the rear surface of the battery case 201.

Referring to FIG. 2, the ring-shaped battery 200 may include a cylindrical battery case 201 including a ring-shaped lower end portion 230 (e.g., bottom surface). According to an embodiment, the battery case 201 may include an outer portion 210 positioned along the outer rim of the ring-shaped lower end portion 230, and an inner portion 220 positioned along the inner rim of the ring-shaped lower end portion 230. The outer portion 210 can be established by an outer case wall of the battery case 201 and the inner portion 220 can be established by an inner case wall of the battery case 201. The distance between the outer portion 210 (e.g., outer case wall) and the inner portion 220 (e.g., inner case wall) defines an inner spacing therebetween. According to an embodiment, the inner spacing extends circumferentially about a hollow void 211 so as to define the profile of the battery case 201. In some embodiments, the profile is ring-shaped; however, it should be appreciated that the inner spacing can surround the hollow void 211 to define a different profile of the battery case (e.g., other than a ring-shape) without departing from the scope of the invention.

According to various embodiments, a plurality of partition walls 240 may be disposed between the outer portion 210 and the inner portion 220 of the battery case 201. For example, the plurality of partition walls 240 may include a first partition wall 241 and a second partition wall 242. According to an embodiment, each of the first partition wall 241 and the second partition wall 242 may be disposed between the outer portion 210 and the inner portion 220 to connect the outer portion 210 and the inner portion 220. According to an embodiment, the plurality of partition walls 240 may be coupled to the lower end portion 230 of the battery case 201. For example, the first partition wall 241 and the second partition wall 242 may be coupled to the lower end portion 230 of the battery case 201.

According to an embodiment, physically separated spaces may be formed inside the battery case 210 by the first partition wall 241 and the second partition wall 242. According to an embodiment, the spaces inside the battery case 210 which are physically separated by the first partition wall 241 and the second partition wall 242 may form a first space (S1) and a second space (S2), and the sizes of the first space (S1) and the second space (S2) may be the same or different. For example, with reference to the plurality of partition walls 240, the outer portion 210 may be divided into a first outer portion 210-1 and a second outer portion 210-2, and the inner portion 220 may be divided into a first inner portion 220-1 and a second inner portion 220-2, and the first space (S1) may be a space formed by being surrounded by the first partition wall 241, the first outer portion 210-1, the second partition wall 242, the first inner portion 220-1, and a first lower end portion 230-1, and the second space (S2) may be a space formed by being surrounded by the first partition wall 241, the second outer portion 220-2, the second partition wall 242, the second inner portion 220-2, and a second lower end portion 230-2.

The embodiment of FIG. 2 shows that the plurality of partition walls 240 are arranged along the diameter of the lower end portion 230 so that the first space (S1) and the second space (S2) are separated to substantially have the same size.

According to various embodiments, the outer portion 210, the inner portion 220, the ring-shaped lower end portion 230, and the plurality of partition walls 240 (e.g., the first partition wall 241 and the second partition wall 242) included in the battery case 201 may be manufactured in a single combined form (e.g., an integrated form) during the manufacturing process. According to an embodiment, the outer portion 210, the inner portion 220, the ring-shaped lower end portion 230, and the plurality of partition walls 240 (e.g., the first partition wall 241 and the second partition wall 242) included in the battery case 201 may be formed of the same material. For example, the outer portion 210, the inner portion 220, the ring-shaped lower end portion 230, and the plurality of partition walls 240 (e.g., the first partition wall 241 and the second partition wall 242) included in the battery case 201 may be formed of the same material which is stainless steel.

Although FIG. 2 shows the ring-shaped battery, the shape of the battery of the disclosure is not limited thereto. For example, the outer shape of the lower end portion 230 of the battery case 201 of FIG. 2 may be a rectangular or curved shape. In addition, hereinafter, the battery and the shape of the electronic device including the battery according to various embodiments of the disclosure are assumed to have a ring shape, but this is only for convenience of description, and the battery and the shape of the electronic device including the battery according to the disclosure are not limited thereto.

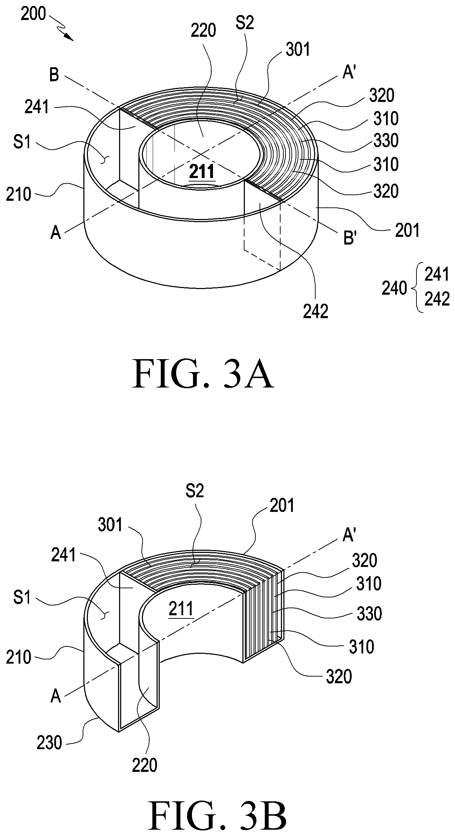

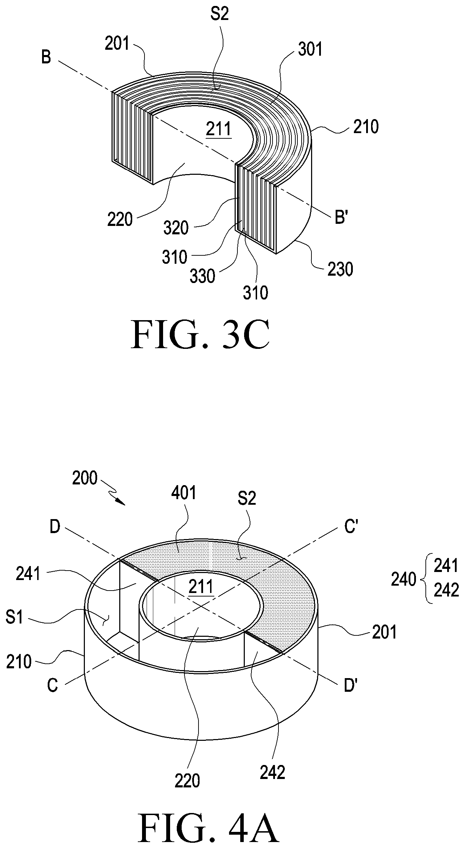

FIG. 3A illustrates the battery 200 including an electrode assembly 301 disposed inside the battery case 201 of FIG. 2, according to various embodiments of the disclosure. FIG. 3B is a sectional view taken along line A-A' of one side of the battery 200 of FIG. 3A, according to various embodiments of the disclosure. FIG. 3C is a sectional view taken along line B-B' of one side of the battery 200 of FIG. 3A, according to various embodiments of the disclosure.

Referring to FIGS. 3A to 3C, the electrode assembly 301 may be disposed in one of the spaces (e.g., the first space (S1) and the second space (S2)) in the battery case 201, which are physically separated by a plurality of partition walls 240 (e.g., the first partition wall 241 and the second partition wall 242). For example, the electrode assembly 301 may be disposed in the second space (S2) inside the battery case 201.

According to various embodiments, the electrode assembly 301 may be positioned between at least a portion of the inner portion 220 of the battery case 201 and at least a portion of the outer portion 210 of the battery case 201 corresponding thereto. The electrode assembly 301 may have a stack-type or stack/folding-type structure formed by a positive electrode 320, a negative electrode 330, and at least one separator 310 interposed therebetween, which are sequentially stacked in parallel with the inner portion 220 and the outer portion 210 of the battery case 201. For example, the electrode assembly 301 may have a stack-type or stack/folding-type structure in which the separator 310, the positive electrode 320, the separator 310, the negative electrode 330, the separator 310, and the positive electrode 320 are sequentially stacked in parallel with the second inner portion 220-2 and the second outer portion 210-2 to be disposed between the second inner portion 220-2 of the battery case 201 included in the second space (S2) and the second outer portion 210-2 of the battery case 201 included in the second space (S2).

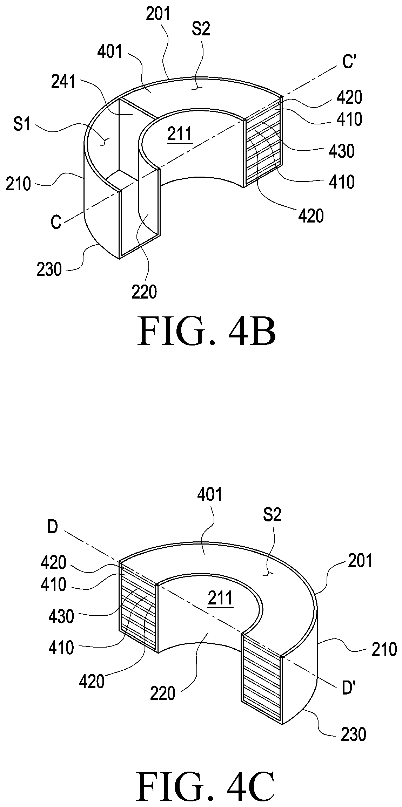

FIG. 4A illustrates the battery 200 including an electrode assembly 401 disposed inside the battery case 201 of FIG. 2, according to other embodiments of the disclosure. FIG. 4B is a sectional view taken along line C-C' of one side of the battery 200 of FIG. 4A, according to various embodiments of the disclosure. FIG. 4C is a sectional view taken along line D-D' of one side of the battery 200 of FIG. 4A, according to various embodiments of the disclosure.

Referring to FIGS. 4A to 4C, the electrode assembly 401 may be disposed in one of the spaces (e.g., the first space (S1) and the second space (S2)) in the battery case 201, which are physically separated by the plurality of partition walls 240 (e.g., the first partition wall 241 and the second partition wall 242). For example, the electrode assembly 401 may be disposed in the second space (S2) inside the battery case 201.

According to various embodiments, the electrode assembly 401 may include a separator 410, a positive electrode 420, and a negative electrode 430 which have a shape corresponding to at least a portion of the lower end portion 230 of the battery case 201, and have a stack-type or stack/folding-type structure formed by the positive electrode 420, the negative electrode 430, and at least one separator 410 interposed therebetween, which are sequentially stacked in parallel with the lower end portion 230 of the battery case 201. For example, the electrode assembly 401 may include a bend-shaped separator 410, positive electrode 420, and negative electrode 430 corresponding to a half of the lower end portion 230 of the battery case 201 included in the second space (S2), and have a stack-type or stack/folding-type structure including one or more separators 410, positive electrodes 420, and negative electrodes 430 which are sequentially staked in parallel with the lower end portion 230 in the order of the separator 410, the positive electrode 420, the negative electrode 430, the separator 410, and the positive electrode 420.

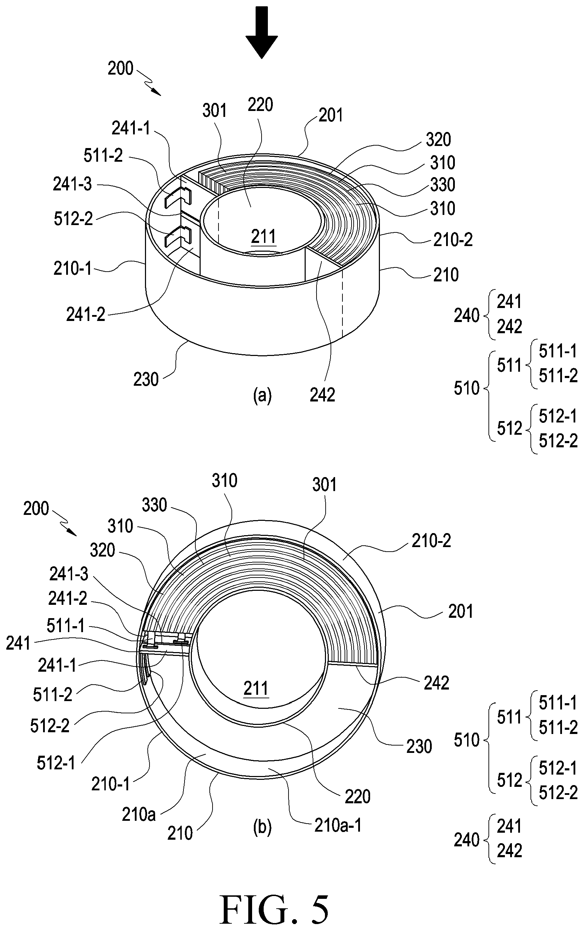

FIG. 5 illustrates the battery 200 including electrode tabs drawn out from the electrode assembly 301 of FIG. 3A, according to various embodiments of the disclosure. FIG. 5B illustrates the battery 200 of FIG. 5A when viewed in a direction indicated by the arrow.

Referring to FIG. 5, each of electrode tabs 510 (e.g., a first electrode tab 511 and a second electrode tab 512) connected to the electrode assembly 301 may be drawn out through one of the partition walls 240 inside the battery case 201, and extend to one region of the inner surface 210a of the outer portion 210 included in a space inside the battery case 201 where the electrode assembly 301 is not disposed. For example, the first electrode tab 511 connected to the electrode assembly 301 may be drawn out through a first region 241-1 of the first partition wall 241 (e.g., via a slot or opening formed in the wall) to extend to a first inner surface 210a-1 of the first outer portion 210-1 of the battery case 201, and the second electrode tab 512 connected to the electrode assembly 301 may be drawn out through a second region 241-2 of the first partition wall 241 (e.g., via the slot or opening) to extend to the first inner surface 210a-1 of the first outer portion 210-1 of the battery case 201.

According to another embodiment, each of the electrode tabs 510 connected to the electrode assembly 301 may include, with respect to a one of the partition walls 240 inside the battery case 201, one portion (e.g., a first portion 511-1 of the first electrode tab 511, or a first portion 512-1 of the second electrode tab 512) coupled to the one of the partition walls 240 in one space where the electrode assembly 301 is disposed, and the remaining portion (e.g., a second portion 511-2 of the first electrode tab 511, or a second portion 512-2 of the second electrode tab 512) coupled to the one of the partition walls 240 in the other space where the electrode assembly 301 is not disposed, to extend to one region of the inner surface 210a of the outer portion 210, and the one portion and the remaining portion of each of the electrode tabs 510 may be electrically connected to each other through the one of the partition walls 240.

For example, the first portion 511-1 of the first electrode tab 511 connected to the electrode assembly 301 may be coupled to the first region 241-1 of the first partition wall 241 in the second space (S2) where the electrode assembly 301 is disposed, the second portion 511-2 of the first electrode tab 511 may be coupled to the first region 241-1 of the first partition wall 241 in the first space (S1) to extend to the first inner surface 210a-1 of the first outer portion 210-1 of the battery case 201, the first portion 512-1 of the second electrode tab 512 connected to the electrode assembly 301 may be coupled to a second region 241-2 of the first partition wall 241 in the second space (S2) where the electrode assembly 301 is disposed, and the second portion 512-2 of the second electrode tab 512 may be coupled to the second region 241-2 of the first partition wall 241 in the first space (S1) to extend to the first inner surface 210a-1 of the first outer portion 210-1 of the battery case 201.

According to an embodiment, the first electrode tab 511 may be physically and/or electrically connected to one of the positive electrodes 320 or the negative electrodes 330 of the electrode assembly 301, and the second electrode tab 512 may be physically and/or electrically connected to the other one of the positive electrodes 320 or the negative electrodes 330 of the electrode assembly 301. For example, the first electrode tab 511 may be connected to the positive electrodes 320 of the electrode assembly 301 to serve as a positive electrode tab, and the second electrode tab 512 may be connected to the negative electrode 330 of the electrode assembly 301 to serve as a negative electrode tab. In another example, the first electrode tab 511 may be connected to the negative electrodes 330 of the electrode assembly 301 to serve as a negative electrode tab, and the second electrode tab 512 may be connected to the positive electrodes 320 of the electrode assembly 301 to serve as a positive electrode tab.

According to an embodiment, regions of the one of the partition walls 240 in which the electrode tabs 510 are drawn out or coupled, respectively, may be electrically separated from each other. For example, an insulation treatment may be performed on a third region 241-3 positioned between the first region 241-1 of the first partition wall 241 in which the first electrode tab 511 is drawn out or coupled and the second region 241-2 in which the second electrode tab 512 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls 240 in which the electrode tabs 510 of the electrode assembly 301 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

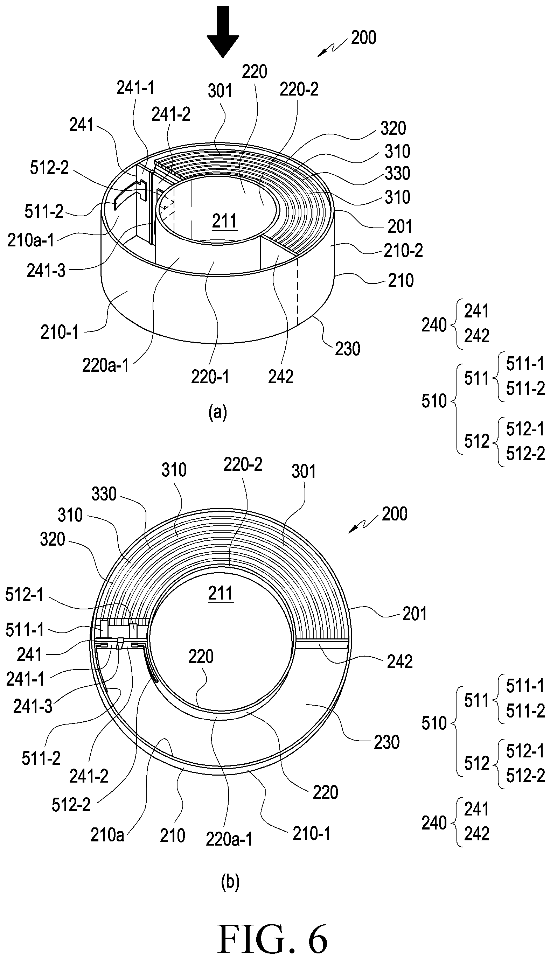

FIG. 6 illustrates the battery 200 including electrode tabs drawn out from the electrode assembly 301 of FIG. 3A, according to other embodiments of the disclosure. FIG. 6B illustrates the battery 200 of FIG. 6A when viewed in a direction indicated by the arrow.

Referring toFIG. 6, electrode tabs 510 (e.g., a first electrode tab 511 and a second electrode tab 512) connected to the electrode assembly 301 may be drawn out through one of the partition walls 240 inside the battery case 201, and extend to one region of the inner surface 210a of the outer portion 210 and one region of the inner surface 220a of the inner portion 220, respectively, included in a space inside the battery case 201 where the electrode assembly 301 is not disposed. For example, the first electrode tab 511 connected to the electrode assembly 301 may be drawn out through the first region 241-1 of the first partition wall 241 to extend to the first inner surface 210a-1 of the first outer portion 210-1 of the battery case 201, and the second electrode tab 512 connected to the electrode assembly 301 may be drawn out through the second region 241-2 of the first partition wall 241 to extend to the first inner surface 220a-1 of the first inner portion 220-1 of the battery case 201. According to another embodiment, each of the electrode tabs 510 connected to the electrode assembly 301 may include, with respect to a one of the partition walls 240 inside the battery case 201, one portion (e.g., a first portion 511-1 of the first electrode tab 511, or a first portion 512-1 of the second electrode tab 512) coupled to the one of the partition walls 240 in one space where the electrode assembly 301 is disposed, and the remaining portion (e.g., a second portion 511-2 of the first electrode tab 511, or a second portion 512-2 of the second electrode tab 512) coupled to the one of the partition walls 240 in the other space where the electrode assembly 301 is not disposed, to extend to one region of the inner surface 210a of the outer portion 210 or one region of the inner surface 220a of the inner portion 220, and the one portion and the remaining portion of each of the electrode tabs 510 may be electrically connected to each other through the one of the partition walls 240. For example, the first portion 511-1 of the first electrode tab 511 connected to the electrode assembly 301 may be coupled to the first region 241-1 of the first partition wall 241 in the second space (S2) where the electrode assembly 301 is disposed, the second portion 511-2 of the first electrode tab 511 may be coupled to the first region 241-1 of the first partition wall 241 in the first space (S1) to extend to the first inner surface 210a-1 of the first outer portion 210-1 of the battery case 201, the first portion 512-1 of the second electrode tab 512 connected to the electrode assembly 301 may be coupled to the second region 241-2 of the first partition wall 241 in the second space (S2) where the electrode assembly 301 is disposed, and the second portion 512-2 of the second electrode tab 512 may be coupled to the second region 241-2 of the first partition wall 241 in the first space (S1) to extend to the first inner surface 220a-1 of the first inner portion 220-1 of the battery case 201. According to an embodiment, the first electrode tab 511 may be physically and/or electrically connected to one of the positive electrodes 320 or the negative electrodes 330 of the electrode assembly 301, and the second electrode tab 512 may be physically and/or electrically connected to the other one of the positive electrodes 320 or the negative electrodes 330 of the electrode assembly 301. For example, the first electrode tab 511 may be connected to the positive electrodes 320 of the electrode assembly 301 to serve as a positive electrode tab, and the second electrode tab 512 may be connected to the negative electrode 330 of the electrode assembly 301 to serve as a negative electrode tab. In another example, the first electrode tab 511 may be connected to the negative electrodes 330 of the electrode assembly 301 to serve as a negative electrode tab, and the second electrode tab 512 may be connected to the positive electrodes 320 of the electrode assembly 301 to serve as a positive electrode tab.

According to an embodiment, regions of the one of the partition walls 240 in which the electrode tabs 510 are drawn out or coupled, respectively, may be electrically separated from each other. For example, an insulation treatment may be performed on a third region 241-3 positioned between the first region 241-1 of the first partition wall 241 in which the first electrode tab 511 is drawn out or coupled and the second region 241-2 in which the second electrode tab 512 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls 240 in which the electrode tabs 510 of the electrode assembly 301 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

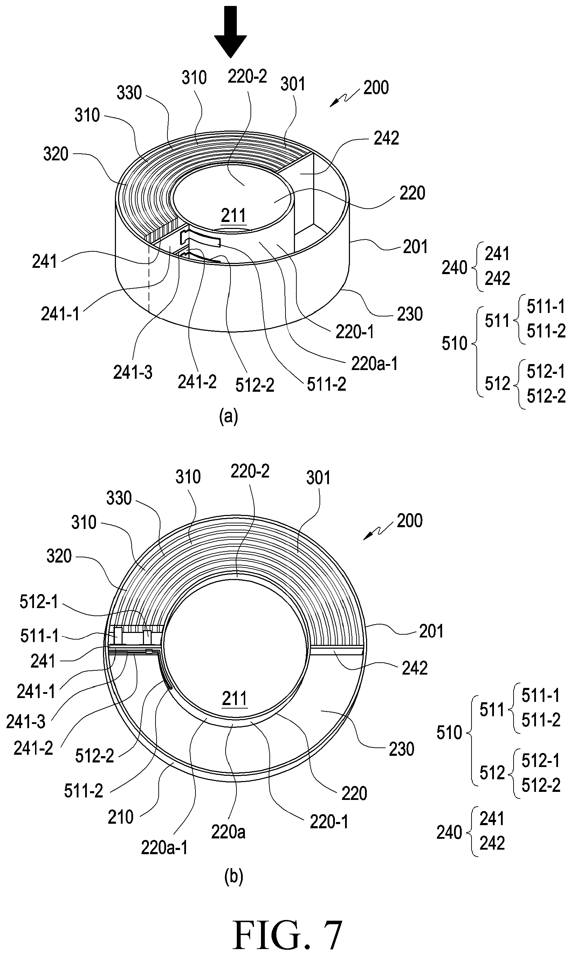

FIG. 7 illustrates the battery 200 including electrode tabs drawn out from the electrode assembly 301 of FIG. 3A, according to other embodiments of the disclosure. FIG. 7B illustrates the battery 200 of FIG. 7A when viewed in a direction indicated by the arrow.

Referring to FIG. 7, each of electrode tabs 510 (e.g., a first electrode tab 511 and a second electrode tab 512) connected to the electrode assembly 301 may be drawn out through one of the partition walls 240 inside the battery case 201, and extend to one region of the inner surface 220a of the inner portion 220 included in a space inside the battery case 201 where the electrode assembly 301 is not disposed. For example, the first electrode tab 511 connected to the electrode assembly 301 may be drawn out through a first region 241-1 of the first partition wall 241 to extend to a first inner surface 220a-1 of the first inner portion 220-1 of the battery case 201, and the second electrode tab 512 connected to the electrode assembly 301 may be drawn out through a second region 241-2 of the first partition wall 241 to extend to the first inner surface 220a-1 of the first inner portion 220-1 of the battery case 201. According to another embodiment, each of the electrode tabs 510 connected to the electrode assembly 301 may include, with respect to a one of the partition walls 240 inside the battery case 201, one portion (e.g., a first portion 511-1 of the first electrode tab 511, or a first portion 512-1 of the second electrode tab 512) coupled to the one of the partition walls 240 in one space where the electrode assembly 301 is disposed, and the remaining portion (e.g., a second portion 511-2 of the first electrode tab 511, or a second portion 512-2 of the second electrode tab 512) coupled to the one of the partition walls 240 in the other space where the electrode assembly 301 is not disposed, to extend to one region of the inner surface 220a of the inner portion 220, and the one portion and the remaining portion of each of the electrode tabs 510 may be electrically connected to each other through the one of the partition walls 240. For example, the first portion 511-1 of the first electrode tab 511 connected to the electrode assembly 301 may be coupled to the first region 241-1 of the first partition wall 241 in the second space (S2) where the electrode assembly 301 is disposed, the second portion 511-2 of the first electrode tab 511 may be coupled to the first region 241-1 of the first partition wall 241 in the first space (S1) to extend to the first inner surface 220a-1 of the first inner portion 220-1 of the battery case 201, the first portion 512-1 of the second electrode tab 512 connected to the electrode assembly 301 may be coupled to a second region 241-2 of the first partition wall 241 in the second space (S2) where the electrode assembly 301 is disposed, and the second portion 512-2 of the second electrode tab 512 may be coupled to the second region 241-2 of the first partition wall 241 in the first space (S1) to extend to the first inner surface 220a-1 of the first inner portion 220-1 of the battery case 201. According to an embodiment, the first electrode tab 511 may be physically and/or electrically connected to one of the positive electrodes 320 or the negative electrodes 330 of the electrode assembly 301, and the second electrode tab 512 may be physically and/or electrically connected to the other one of the positive electrodes 320 or the negative electrodes 330 of the electrode assembly 301. For example, the first electrode tab 511 may be connected to the positive electrodes 320 of the electrode assembly 301 to serve as a positive electrode tab, and the second electrode tab 512 may be connected to the negative electrode 330 of the electrode assembly 301 to serve as a negative electrode tab. In another example, the first electrode tab 511 may be connected to the negative electrodes 330 of the electrode assembly 301 to serve as a negative electrode tab, and the second electrode tab 512 may be connected to the positive electrodes 320 of the electrode assembly 301 to serve as a positive electrode tab.

According to an embodiment, region of the one of the partition walls 240 in which the electrode tabs 510 are drawn out or coupled, respectively, may be electrically separated from each other. For example, an insulation treatment may be performed on a third region 241-3 positioned between the first region 241-1 of the first partition wall 241 in which the first electrode tab 511 is drawn out or coupled and the second region 241-2 in which the second electrode tab 512 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls 240 in which the electrode tabs 510 of the electrode assembly 301 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

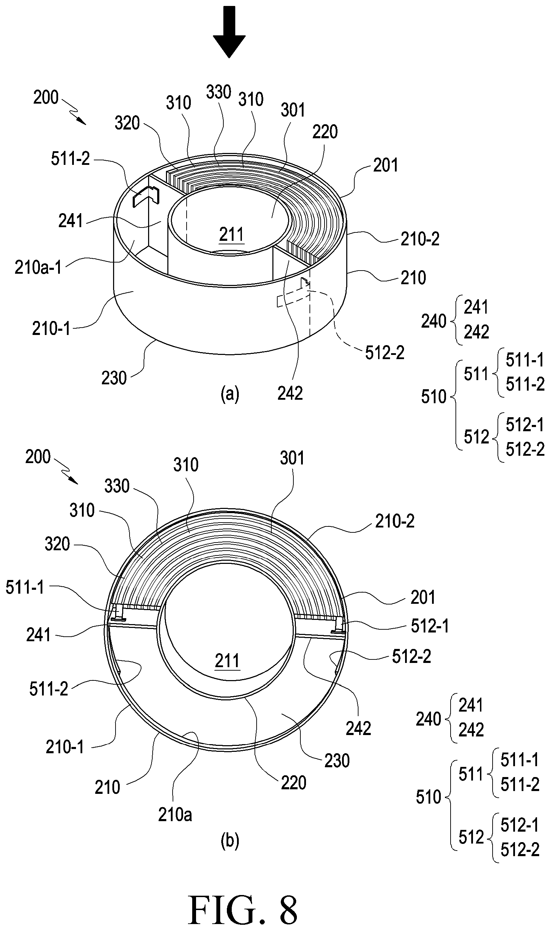

FIG. 8 illustrates the battery 200 including electrode tabs drawn out from the electrode assembly 301 of FIG. 3A, according to various embodiments of the disclosure. FIG. 8B illustrates the battery 200 of FIG. 8A when viewed in a direction indicated by the arrow.

Referring to FIG. 8, each of electrode tabs 510 (e.g., a first electrode tab 511 and a second electrode tab 512) connected to the electrode assembly 301 may be drawn out through the different partition wall 240 inside the battery case 201, and extend to one region of the inner surface 210a of the outer portion 210 included in a space inside the battery case 201 where the electrode assembly 301 is not disposed. For example, the first electrode tab 511 connected to the electrode assembly 301 may be drawn out through the first partition wall 241 to extend to a first inner surface 210a-1 of the first outer portion 210-1 of the battery case 201, and the second electrode tab 512 connected to the electrode assembly 301 may be drawn out through the second partition wall 242 to extend to the first inner surface 210a-1 of the first outer portion 210-1 of the battery case 201. According to another embodiment, each of the electrode tabs 510 connected to the electrode assembly 301 may include, with respect to the different partition walls 240 inside the battery case 201, one portion (e.g., a first portion 511-1 of the first electrode tab 511, or a first portion 512-1 of the second electrode tab 512) coupled to the corresponding partition wall among the partition walls 240 in one space where the electrode assembly 301 is disposed, and the remaining portion (e.g., a second portion 511-2 of the first electrode tab 511, or a second portion 512-2 of the second electrode tab 512) coupled to the corresponding partition wall among the partition walls 240 in the other space where the electrode assembly 301 is not disposed, to extend to one region of the inner surface 210a of the outer portion 210, and the one portion and the remaining portion of each of the electrode tabs 510 may be electrically connected to each other through the corresponding partition wall among the partition walls 240. For example, the first portion 511-1 of the first electrode tab 511 connected to the electrode assembly 301 may be coupled to the first partition wall 241 in the second space (S2) where the electrode assembly 301 is disposed, the second portion 511-2 of the first electrode tab 511 may be coupled to the first partition wall 241 in the first space (S1) to extend to the first inner surface 210a-1 of the first outer portion 210-1 of the battery case 201, the first portion 512-1 of the second electrode tab 512 connected to the electrode assembly 301 may be coupled to the second partition wall 242 in the second space (S2) where the electrode assembly 301 is disposed, and the second portion 512-2 of the second electrode tab 512 may be coupled to the second partition wall 242 in the first space (S1) to extend to the first inner surface 210a-1 of the first outer portion 210-1 of the battery case 201. According to an embodiment, the first electrode tab 511 may be physically and/or electrically connected to one of the positive electrodes 320 or the negative electrodes 330 of the electrode assembly 301, and the second electrode tab 512 may be physically and/or electrically connected to the other one of the positive electrodes 320 or the negative electrodes 330 of the electrode assembly 301. For example, the first electrode tab 511 may be connected to the positive electrodes 320 of the electrode assembly 301 to serve as a positive electrode tab, and the second electrode tab 512 may be connected to the negative electrode 330 of the electrode assembly 301 to serve as a negative electrode tab. In another example, the first electrode tab 511 may be connected to the negative electrodes 330 of the electrode assembly 301 to serve as a negative electrode tab, and the second electrode tab 512 may be connected to the positive electrodes 320 of the electrode assembly 301 to serve as a positive electrode tab.

According to an embodiment, an insulation treatment may be performed on regions of the battery case 201, other than at least a partial region of the partition walls 240 in which the electrode tabs 510 of the electrode assembly 301 are drawn out or coupled. For example, the insulation treatment may be performed on the outer portion 210, the inner portion 220, and the lower end portion 230 of the battery case 201, except for the partition walls 240.

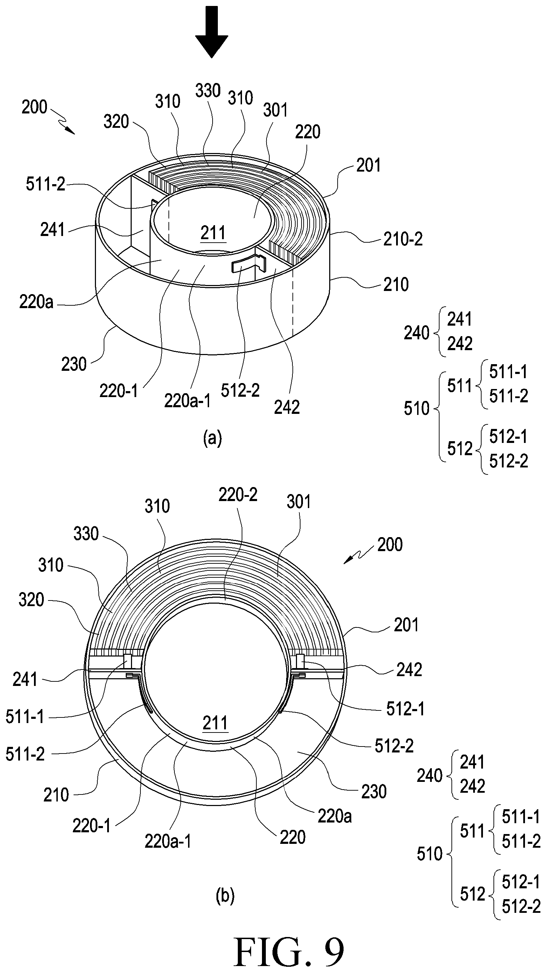

FIG. 9 illustrates the battery 200 including electrode tabs drawn out from the electrode assembly 301 of FIG. 3A, according to various embodiments of the disclosure. FIG. 9B illustrates the battery 200 of FIG. 9A when viewed in a direction indicated by the arrow.

Referring to FIG. 9, each of electrode tabs 510 (e.g., a first electrode tab 511 and a second electrode tab 512) connected to the electrode assembly 301 may be drawn out through the different partition wall 240 inside the battery case 201, and extend to one region of the inner surface 220a of the inner portion 220 included in a space inside the battery case 201 where the electrode assembly 301 is not disposed. For example, the first electrode tab 511 connected to the electrode assembly 301 may be drawn out through the first partition wall 241 to extend to the first inner surface 220a-1 of the first inner portion 220-1 of the battery case 201, and the second electrode tab 512 connected to the electrode assembly 301 may be drawn out through the second partition wall 242 to extend to the first inner surface 220a-1 of the first inner portion 220-1 of the battery case 201. According to another embodiment, each of the electrode tabs 510 connected to the electrode assembly 301 may include, with respect to the different partition walls 240 inside the battery case 201, one portion (e.g., a first portion 511-1 of the first electrode tab 511, or a first portion 512-1 of the second electrode tab 512) coupled to the corresponding partition wall among the partition walls 240 in one space where the electrode assembly 301 is disposed, and the remaining portion (e.g., a second portion 511-2 of the first electrode tab 511, or a second portion 512-2 of the second electrode tab 512) coupled to the corresponding partition wall among the partition walls 240 in the other space where the electrode assembly 301 is not disposed, to extend to one region of the inner surface 220a of the inner portion 220, and the one portion and the remaining portion of each of the electrode tabs 510 may be electrically connected to each other through the corresponding partition wall among the partition walls 240. For example, the first portion 511-1 of the first electrode tab 511 connected to the electrode assembly 301 may be coupled to the first partition wall 241 in the second space (S2) where the electrode assembly 301 is disposed, the second portion 511-2 of the first electrode tab 511 may be coupled to the first partition wall 241 in the first space (S1) to extend to the first inner surface 220a-1 of the first inner portion 220-1 of the battery case 201, the first portion 512-1 of the second electrode tab 512 connected to the electrode assembly 301 may be coupled to the second partition wall 242 in the second space (S2) where the electrode assembly 301 is disposed, and the second portion 512-2 of the second electrode tab 512 may be coupled to the second partition wall 242 in the first space (S1) to extend to the first inner surface 220a-1 of the first inner portion 220-1 of the battery case 201. According to an embodiment, the first electrode tab 511 may be physically and/or electrically connected to one of the positive electrodes 320 or the negative electrodes 330 of the electrode assembly 301, and the second electrode tab 512 may be physically and/or electrically connected to the other one of the positive electrodes 320 or the negative electrodes 330 of the electrode assembly 301. For example, the first electrode tab 511 may be connected to the positive electrodes 320 of the electrode assembly 301 to serve as a positive electrode tab, and the second electrode tab 512 may be connected to the negative electrode 330 of the electrode assembly 301 to serve as a negative electrode tab. In another example, the first electrode tab 511 may be connected to the negative electrodes 330 of the electrode assembly 301 to serve as a negative electrode tab, and the second electrode tab 512 may be connected to the positive electrodes 320 of the electrode assembly 301 to serve as a positive electrode tab.

According to an embodiment, an insulation treatment may be performed on regions of the battery case 201, other than at least a partial region of the partition walls 240 in which the electrode tabs 510 of the electrode assembly 301 are drawn out or coupled. For example, the insulation treatment may be performed on the outer portion 210, the inner portion 220, and the lower end portion 230 of the battery case 201, except for the partition walls 240.

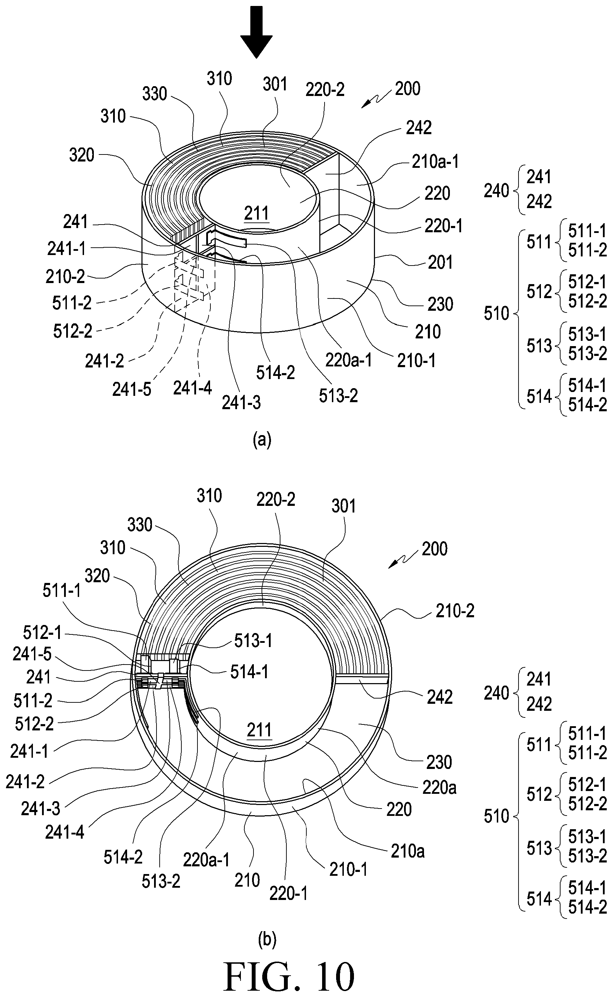

FIG. 10 illustrates the battery 200 including electrode tabs drawn out from the electrode assembly 301 of FIG. 3A, according to other embodiments of the disclosure. FIG. 10B illustrates the battery 200 of FIG. 10A when viewed in a direction indicated by the arrow.

Referring to FIG. 10, electrode tabs 510 (e.g., a first electrode tab 511, a second electrode tab 512, a third electrode tab 513, and a fourth electrode tab 514) connected to the electrode assembly 301 may be drawn out through one of the partition walls 240 inside the battery case 201, and extend to one region of the inner surface 210a of the outer portion 210 and one region of the inner surface 220a of the inner portion 220, respectively, included in a space inside the battery case 201 where the electrode assembly 301 is not disposed. For example, the first electrode tab 511 connected to the electrode assembly 301 may be drawn out through the first region 241-1 of the first partition wall 241 to extend to the first inner surface 210a-1 of the first outer portion 210-1 of the battery case 201, the second electrode tab 512 connected to the electrode assembly 301 may be drawn out through the second region 241-2 of the first partition wall 241 to extend to the first inner surface 210a-1 of the first outer portion 210-1 of the battery case 201, a third electrode tab 513 connected to the electrode assembly 301 may be drawn out through a third region 241-3 of the first partition wall 241 to extend to the first inner surface 220a-1 of the first inner portion 220-1 of the battery case 201, and a fourth electrode tab 514 connected to the electrode assembly 301 may be drawn out through a fourth region 241-4 of the first partition wall 241 to extend to the first inner surface 220a-1 of the first inner portion 220-1 of the battery case 201. According to another embodiment, each of the electrode tabs 510 connected to the electrode assembly 301 may include, with respect to a one of the partition walls 240 inside the battery case 201, one portion (e.g., a first portion 511-1 of the first electrode tab 511, a first portion 512-1 of the second electrode tab 512, a first portion 513-1 of the third electrode tab 513, or a first portion 514-1 of the fourth electrode tab 514) coupled to the one of the partition walls 240 in one space where the electrode assembly 301 is disposed, and the remaining portion (e.g., a second portion 511-2 of the first electrode tab 511, a second portion 512-2 of the second electrode tab 512, a second portion 513-2 of the third electrode tab 513, or a second portion 514-2 of the fourth electrode tab 514) coupled to the one of the partition walls 240 in the other space where the electrode assembly 301 is not disposed, to extend to one region of the inner surface 210a of the outer portion 210 or one region of the inner surface 220a of the inner portion 220, and the one portion and the remaining portion of each of the electrode tabs 510 may be electrically connected to each other through the one of the partition walls 240. For example, the first portion 511-1 of the first electrode tab 511 connected to the electrode assembly 301 may be coupled to the first region 241-1 of the first partition wall 241 in the second space (S2) where the electrode assembly 301 is disposed. The second portion 511-2 of the first electrode tab 511 may be coupled to the first region 241-1 of the first partition wall 241 in the first space (S1) to extend to the first inner surface 210a-1 of the first outer portion 210-1 of the battery case 201. The first portion 512-1 of the second electrode tab 512 is connected to the electrode assembly 301 may be coupled to the second region 241-2 of the first partition wall 241 in the second space (S2) where the electrode assembly 301 is disposed. The second portion 512-2 of the second electrode tab 512 may be coupled to the second region 241-2 of the first partition wall 241 in the first space (S1) to extend to the first inner surface 210a-1 of the first outer portion 210-1 of the battery case 201. The first portion 513-1 of the third electrode tab 513 is connected to the electrode assembly 301 may be coupled to the third region 241-3 of the first partition wall 241 in the second space (S2) where the electrode assembly 301 is disposed. The second portion 513-2 of the third electrode tab 513 may be coupled to the third region 241-3 of the first partition wall 241 in the first space (S1) to extend to the first inner surface 220a-1 of the first inner portion 220-1 of the battery case 201, the first portion 514-1 of the fourth electrode tab 514 connected to the electrode assembly 301 may be coupled to the fourth region 241-4 of the first partition wall 241 in the second space (S2) where the electrode assembly 301 is disposed. The second portion 514-2 of the fourth electrode tab 514 may be coupled to the fourth region 241-4 of the first partition wall 241 in the first space (S1) to extend to the first inner surface 220a-1 of the first inner portion 220-1 of the battery case 201. According to an embodiment, the first electrode tab 511 and the third electrode tab 513 may be physically and/or electrically connected to one of the positive electrodes 320 or the negative electrodes 330 of the electrode assembly 301, and the second electrode tab 512 and the fourth electrode tab 514 may be physically and/or electrically connected to the other one of the positive electrodes 320 or the negative electrodes 330 of the electrode assembly 301. For example, the first electrode tab 511 and the third electrode tab 513 may be connected to the positive electrodes 320 of the electrode assembly 301 to serve as a positive electrode tab, and the second electrode tab 512 and the fourth electrode tab 514 may be connected to the negative electrode 330 of the electrode assembly 301 to serve as a negative electrode tab. In another example, the first electrode tab 511 and the third electrode tab 513 may be connected to the negative electrodes 330 of the electrode assembly 301 to serve as a negative electrode tab, and the second electrode tab 512 and the fourth electrode tab 514 may be connected to the positive electrodes 320 of the electrode assembly 301 to serve as a positive electrode tab.

According to an embodiment, region of the one of the partition walls 240 in which the electrode tabs 510 are drawn out or coupled, respectively, may be electrically separated from each other. For example, the fifth region 241-5 positioned between the first region 241-1, the second region 241-2, and the third region 241-3 of the first partition wall 241 in which the first electrode tab 511, the second electrode tab 512, and the third electrode tab 513 are drawn out, respectively, and the fourth region 241-4 in which the fourth electrode tab 514 is drawn out may undergo an insulation treatment so as to be electrically separated from the first region 241-1, the second region 241-2, the third region 241-3, and the fourth region 241-4.

According to an embodiment, an insulation treatment may be performed on regions of the battery case 201, other than at least a partial region of the one (e.g., the first partition wall 241 or the second partition wall 242) of the partition walls 240 in which the electrode tabs 510 of the electrode assembly 301 are drawn out or coupled. For example, the insulation treatment may be performed on the outer portion 210, the inner portion 220, the lower end portion 230, and the second partition wall 242 of the battery case 201, except for at least a partial region (e.g., the first region 241-1, the second region 241-2, the third region 241-3, and the fourth region 241-4) of the first partition wall 241.

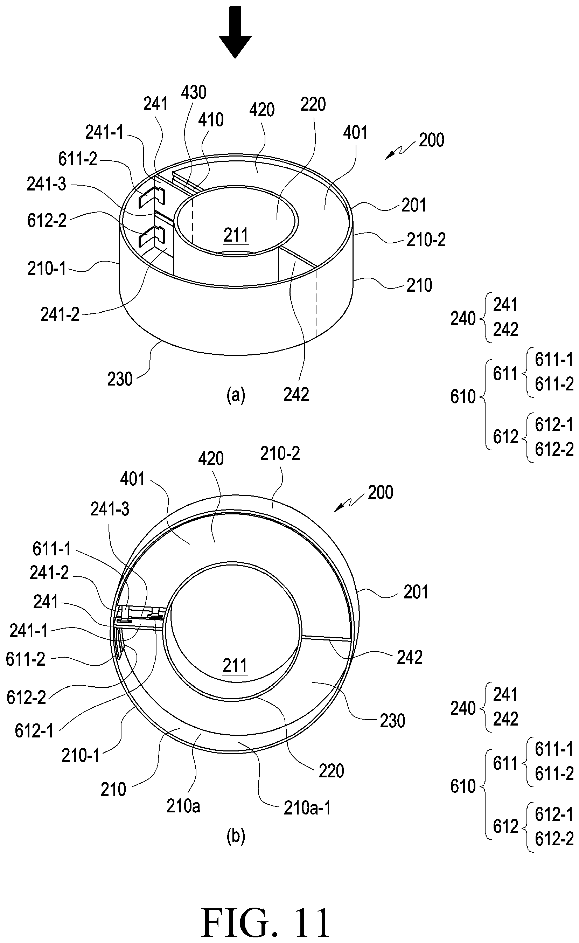

FIG. 11 illustrates the battery 200 including electrode tabs drawn out from the electrode assembly 401 of FIG. 4A, according to various embodiments of the disclosure. FIG. 11B illustrates the battery 200 of FIG. 11A when viewed in a direction indicated by the arrow.

Referring to FIG. 11, each of electrode tabs 610 (e.g., a first electrode tab 611 and a second electrode tab 612) connected to the electrode assembly 401 may be drawn out through one of the partition walls 240 inside the battery case 201, and extend to one region of the inner surface 210a of the outer portion 210 included in a space inside the battery case 201 where the electrode assembly 401 is not disposed. For example, the first electrode tab 611 connected to the electrode assembly 401 may be drawn out through the first region 241-1 of the first partition wall 241 to extend to the first inner surface 210a-1 of the first outer portion 210-1 of the battery case 201, and the second electrode tab 612 connected to the electrode assembly 401 may be drawn out through the second region 241-2 of the first partition wall 241 to extend to the first inner surface 210a-1 of the first outer portion 210-1 of the battery case 201. According to another embodiment, each of the electrode tabs 610 connected to the electrode assembly 401 may include, with respect to a one of the partition walls 240 inside the battery case 201, one portion (e.g., a first portion 611-1 of the first electrode tab 611, or a first portion 612-1 of the second electrode tab 612) coupled to the one of the partition walls 240 in one space where the electrode assembly 401 is disposed, and the remaining portion (e.g., a second portion 611-2 of the first electrode tab 611, or a second portion 612-2 of the second electrode tab 612) coupled to the one of the partition walls 240 in the other space where the electrode assembly 401 is not disposed, to extend to one region of the inner surface 210a of the outer portion 210, and the one portion and the remaining portion of each of the electrode tabs 610 may be electrically connected to each other through the one of the partition walls 240. For example, the first portion 611-1 of the first electrode tab 611 connected to the electrode assembly 401 may be coupled to the first region 241-1 of the first partition wall 241 in the second space (S2) where the electrode assembly 401 is disposed, the second portion 611-2 of the first electrode tab 611 may be coupled to the first region 241-1 of the first partition wall 241 in the first space (S1) to extend to the first inner surface 210a-1 of the first outer portion 210-1 of the battery case 201, the first portion 612-1 of the second electrode tab 612 connected to the electrode assembly 401 may be coupled to a second region 241-2 of the first partition wall 241 in the second space (S2) where the electrode assembly 401 is disposed, and the second portion 612-2 of the second electrode tab 612 may be coupled to the second region 241-2 of the first partition wall 241 in the first space (S1) to extend to the first inner surface 210a-1 of the first outer portion 210-1 of the battery case 201. According to an embodiment, the first electrode tab 611 may be physically and/or electrically connected to one of the positive electrodes 420 or the negative electrodes 430 of the electrode assembly 401, and the second electrode tab 612 may be physically and/or electrically connected to the other one of the positive electrodes 420 or the negative electrodes 430 of the electrode assembly 401. For example, the first electrode tab 611 may be connected to the positive electrodes 420 of the electrode assembly 401 to serve as a positive electrode tab, and the second electrode tab 612 may be connected to the negative electrode 430 of the electrode assembly 401 to serve as a negative electrode tab. **In** another example, the first electrode tab 611 may be connected to the negative electrodes 430 of the electrode assembly 401 to serve as a negative electrode tab, and the second electrode tab 612 may be connected to the positive electrodes 420 of the electrode assembly 401 to serve as a positive electrode tab.

According to an embodiment, regions one of the partition walls 240 in which the electrode tabs 610 are drawn out or coupled, respectively, may be electrically separated from each other. For example, an insulation treatment may be performed on a third region 241-3 positioned between the first region 241-1 of the first partition wall 241 in which the first electrode tab 611 is drawn out or coupled and the second region 241-2 in which the second electrode tab 612 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls in which the electrode tabs 610 of the electrode assembly 401 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

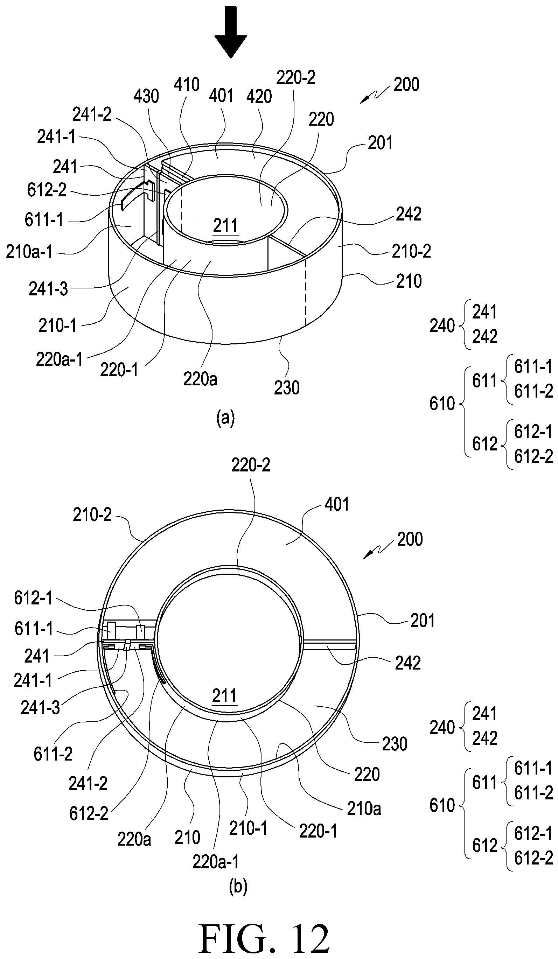

FIG. 12 illustrates the battery 200 including electrode tabs drawn out from the electrode assembly 401 of FIG. 4A, according to other embodiments of the disclosure. FIG. 12B illustrates the battery 200 of FIG. 12A when viewed in a direction indicated by the arrow.

Referring to FIG. 12, electrode tabs 610 (e.g., a first electrode tab 611 and a second electrode tab 612) connected to the electrode assembly 401 may be drawn out through one of the partition walls 240 inside the battery case 201, and extend to one region of the inner surface 210a of the outer portion 210 and one region of the inner surface 220a of the inner portion 220, respectively, included in a space inside the battery case 201 where the electrode assembly 401 is not disposed. For example, the first electrode tab 611 connected to the electrode assembly 401 may be drawn out through the first region 241-1 of the first partition wall 241 to extend to the first inner surface 210a-1 of the first outer portion 210-1 of the battery case 201. The second electrode tab 612 connected to the electrode assembly 401 may be drawn out through the second region 241-2 of the first partition wall 241 to extend to the first inner surface 220a-1 of the first inner portion 220-1 of the battery case 201.

According to another embodiment, each of the electrode tabs 610 connected to the electrode assembly 401 may include, with respect to a one of the partition walls 240 inside the battery case 201, one portion (e.g., a first portion 611-1 of the first electrode tab 611, or a first portion 612-1 of the second electrode tab 612) coupled to the one of the partition walls 240 in one space where the electrode assembly 401 is disposed, and the remaining portion (e.g., a second portion 611-2 of the first electrode tab 611, or a second portion 612-2 of the second electrode tab 612) coupled to the one of the partition walls 240 in the other space where the electrode assembly 401 is not disposed, to extend to one region of the inner surface 210a of the outer portion 210 or one region of the inner surface 220a of the inner portion 220, and the one portion and the remaining portion of each of the electrode tabs 610 may be electrically connected to each other through the one of the partition walls 240. For example, the first portion 611-1 of the first electrode tab 611 connected to the electrode assembly 401 may be coupled to the first region 241-1 of the first partition wall 241 in the second space (S2) where the electrode assembly 401 is disposed, the second portion 611-2 of the first electrode tab 611 may be coupled to the first region 241-1 of the first partition wall 241 in the first space (S1) to extend to the first inner surface 210a-1 of the first outer portion 210-1 of the battery case 201, the first portion 612-1 of the second electrode tab 612 connected to the electrode assembly 401 may be coupled to the second region 241-2 of the first partition wall 241 in the second space (S2) where the electrode assembly 401 is disposed, and the second portion 612-2 of the second electrode tab 612 may be coupled to the second region 241-2 of the first partition wall 241 in the first space (S1) to extend to the first inner surface 220a-1 of the first inner portion 220-1 of the battery case 201. According to an embodiment, the first electrode tab 611 may be physically and/or electrically connected to one of the positive electrodes 420 or the negative electrodes 430 of the electrode assembly 401, and the second electrode tab 612 may be physically and/or electrically connected to the other one of the positive electrodes 420 or the negative electrodes 430 of the electrode assembly 401. For example, the first electrode tab 611 may be connected to the positive electrodes 420 of the electrode assembly 401 to serve as a positive electrode tab, and the second electrode tab 612 may be connected to the negative electrode 430 of the electrode assembly 401 to serve as a negative electrode tab. In another example, the first electrode tab 611 may be connected to the negative electrodes 430 of the electrode assembly 401 to serve as a negative electrode tab, and the second electrode tab 612 may be connected to the positive electrodes 420 of the electrode assembly 401 to serve as a positive electrode tab.

According to an embodiment, regions one of the partition walls 240 in which the electrode tabs 610 are drawn out or coupled, respectively, may be electrically separated from each other. For example, an insulation treatment may be performed on a third region 241-3 positioned between the first region 241-1 of the first partition wall 241 in which the first electrode tab 611 is drawn out or coupled and the second region 241-2 in which the second electrode tab 612 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls in which the electrode tabs 610 of the electrode assembly 401 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

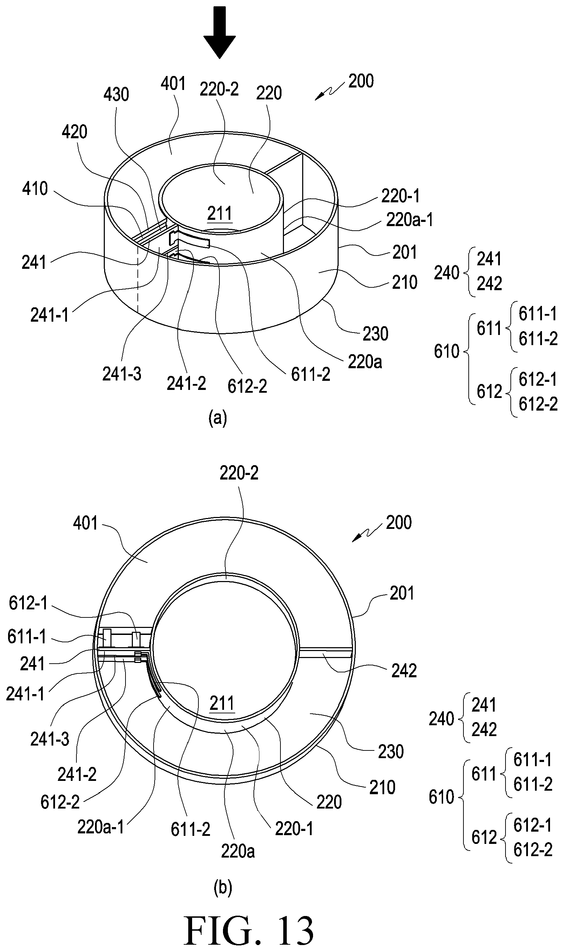

FIG. 13 illustrates the battery 200 including electrode tabs drawn out from the electrode assembly 401 of FIG. 4A, according to other embodiments of the disclosure. FIG. 13B illustrates the battery 200 of FIG. 13A when viewed in a direction indicated by the arrow.

Referring to FIG. 13, each of electrode tabs 610 (e.g., a first electrode tab 611 and a second electrode tab 612) connected to the electrode assembly 401 may be drawn out through one of the partition walls 240 inside the battery case 201, and extend to one region of the inner surface 220a of the inner portion 220 included in a space inside the battery case 201 where the electrode assembly 401 is not disposed. For example, the first electrode tab 611 connected to the electrode assembly 401 may extend to a first inner surface 220a-1 of the first inner portion 220-1 of the battery case 201 through the first region 241-1 of the first partition wall 241, and the second electrode tab 612 connected to the electrode assembly 401 may be drawn out through the second region 241-2 of the first partition wall 241 to extend to the first inner surface 220a-1 of the first inner portion 220-1 of the battery case 201. According to another embodiment, each of the electrode tabs 610 connected to the electrode assembly 401 may include, with respect to a one of the partition walls 240 inside the battery case 201, one portion (e.g., a first portion 611-1 of the first electrode tab 611, or a first portion 612-1 of the second electrode tab 612) coupled to the one of the partition walls 240 in one space where the electrode assembly 401 is disposed, and the remaining portion (e.g., a second portion 611-2 of the first electrode tab 611, or a second portion 612-2 of the second electrode tab 612) coupled to the one of the partition walls 240 in the other space where the electrode assembly 401 is not disposed, to extend to one region of the inner surface 220a of the inner portion 220, and the one portion and the remaining portion of each of the electrode tabs 610 may be electrically connected to each other through the one of the partition walls 240. For example, the first portion 611-1 of the first electrode tab 611 connected to the electrode assembly 401 may be coupled to the first region 241-1 of the first partition wall 241 in the second space (S2) where the electrode assembly 401 is disposed. The second portion 611-2 of the first electrode tab 611 may be coupled to the first region 241-1 of the first partition wall 241 in the first space (S1) to extend to the first inner surface 220a-1 of the first inner portion 220-1 of the battery case 201, the first portion 612-1 of the second electrode tab 612 connected to the electrode assembly 401 may be coupled to a second region 241-2 of the first partition wall 241 in the second space (S2) where the electrode assembly 601 is disposed. The second portion 612-2 of the second electrode tab 612 may be coupled to the second region 241-2 of the first partition wall 241 in the first space (S1) to extend to the first inner surface 220a-1 of the first inner portion 220-1 of the battery case 201. According to an embodiment, the first electrode tab 611 may be physically and/or electrically connected to one of the positive electrodes 420 or the negative electrodes 430 of the electrode assembly 401, and the second electrode tab 612 may be physically and/or electrically connected to the other one of the positive electrodes 420 or the negative electrodes 430 of the electrode assembly 401. For example, the first electrode tab 611 may be connected to the positive electrodes 420 of the electrode assembly 401 to serve as a positive electrode tab, and the second electrode tab 612 may be connected to the negative electrode 430 of the electrode assembly 401 to serve as a negative electrode tab. In another example, the first electrode tab 611 may be connected to the negative electrodes 430 of the electrode assembly 401 to serve as a negative electrode tab, and the second electrode tab 612 may be connected to the positive electrodes 420 of the electrode assembly 401 to serve as a positive electrode tab.

According to an embodiment, regions one of the partition walls 240 in which the electrode tabs 610 are drawn out or coupled, respectively, may be electrically separated from each other. For example, an insulation treatment may be performed on a third region 241-3 positioned between the first region 241-1 of the first partition wall 241 in which the first electrode tab 611 is drawn out or coupled and the second region 241-2 in which the second electrode tab 612 is drawn out or coupled, so that the first region 241-1 and the second region 241-2 can be electrically separated from each other.

According to an embodiment, an insulation treatment may be performed on regions of the battery case 201, other than at least a partial region of the one (e.g., the first partition wall 241 or the second partition wall 242) of the partition walls 240 in which the electrode tabs 610 of the electrode assembly 401 are drawn out or coupled. For example, the insulation treatment may be performed on the outer portion 210, the inner portion 220, the lower end portion 230, and the second partition wall 242 of the battery case 201, except for at least a partial region (e.g., the fist region 241-1 and the second region 241-2) of the first partition wall 241.

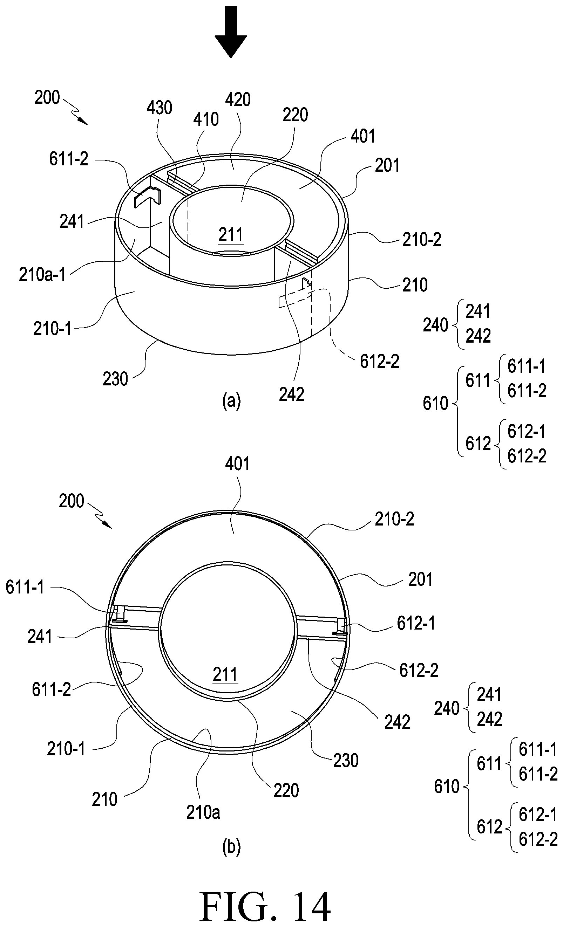

FIG. 14 illustrates the battery 200 including electrode tabs drawn out from the electrode assembly 401 of FIG. 4A, according to various embodiments of the disclosure. FIG. 14B illustrates the battery 200 of FIG. 14A when viewed in a direction indicated by the arrow.

Referring to FIG. 14, each of electrode tabs 610 (e.g., a first electrode tab 611 and a second electrode tab 612) connected to the electrode assembly 401 may be drawn out through the different partition wall 240 inside the battery case 201, and extend to one region of the inner surface 210a of the outer portion 210 included in a space inside the battery case 201 where the electrode assembly 401 is not disposed. For example, the first electrode tab 611 connected to the electrode assembly 401 may be drawn out through the first partition wall 241 to extend to a first inner surface 210a-1 of the first outer portion 210-1 of the battery case 201, and the second electrode tab 612 connected to the electrode assembly 401 may be drawn out through the second partition wall 242 to extend to the first inner surface 210a-1 of the first outer portion 210-1 of the battery case 201. According to another embodiment, each of the electrode tabs 610 connected to the electrode assembly 401 may include, with respect to the different partition walls 240 inside the battery case 201, one portion (e.g., a first portion 611-1 of the first electrode tab 611, or a first portion 612-1 of the second electrode tab 612) coupled to the corresponding partition wall among the partition walls 240 in one space where the electrode assembly 401 is disposed, and the remaining portion (e.g., a second portion 611-2 of the first electrode tab 611, or a second portion 612-2 of the second electrode tab 612) coupled to the corresponding partition wall among the partition walls 240 in the other space where the electrode assembly 401 is not disposed, to extend to one region of the inner surface 210a of the outer portion 210, and the one portion and the remaining portion of each of the electrode tabs 610 may be electrically connected to each other through the corresponding partition wall among the partition walls 240. For example, the first portion 611-1 of the first electrode tab 511 connected to the electrode assembly 401 may be coupled to the first partition wall 241 in the second space (S2) where the electrode assembly 401 is disposed. The second portion 611-2 of the first electrode tab 611 may be coupled to the first partition wall 241 in the first space (S1) to extend to the first inner surface 210a-1 of the first outer portion 210-1 of the battery case 201, the first portion 612-1 of the second electrode tab 612 connected to the electrode assembly 401 may be coupled to the second partition wall 242 in the second space (S2) where the electrode assembly 401 is disposed. The second portion 612-2 of the second electrode tab 612 may be coupled to the second partition wall 242 in the first space (S1) to extend to the first inner surface 210a-1 of the first outer portion 210-1 of the battery case 201. According to an embodiment, the first electrode tab 611 may be physically and/or electrically connected to one of the positive electrodes 420 or the negative electrodes 430 of the electrode assembly 401, and the second electrode tab 612 may be physically and/or electrically connected to the other one of the positive electrodes 420 or the negative electrodes 430 of the electrode assembly 401. For example, the first electrode tab 611 may be connected to the positive electrodes 420 of the electrode assembly 401 to serve as a positive electrode tab, and the second electrode tab 612 may be connected to the negative electrode 430 of the electrode assembly 401 to serve as a negative electrode tab. In another example, the first electrode tab 611 may be connected to the negative electrodes 430 of the electrode assembly 401 to serve as a negative electrode tab, and the second electrode tab 612 may be connected to the positive electrodes 420 of the electrode assembly 401 to serve as a positive electrode tab.

According to an embodiment, an insulation treatment may be performed on regions of the battery case 201, other than at least a partial region of the partition walls 240 in which the electrode tabs 610 of the electrode assembly 401 are drawn out or coupled. For example, the insulation treatment may be performed on the outer portion 210, the inner portion 220, and the lower end portion 230 of the battery case 201, except for the partition walls 240.

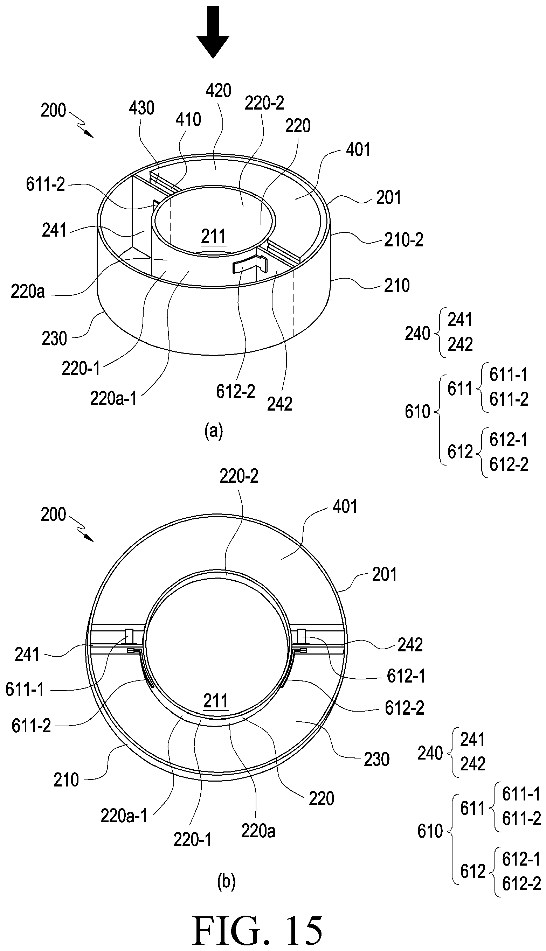

FIG. 15 illustrates the battery 200 including electrode tabs drawn out from the electrode assembly 401 of FIG. 4A, according to various embodiments of the disclosure. FIG. 15B illustrates the battery 200 of FIG. 15A when viewed in a direction indicated by the arrow.

Referring to FIG. 15, each of electrode tabs 610 (e.g., a first electrode tab 611 and a second electrode tab 612) connected to the electrode assembly 401 may be drawn out through the different partition wall 240 inside the battery case 201, and extend to one region of the inner surface 220a of the inner portion 220 included in a space inside the battery case 201 where the electrode assembly 401 is not disposed. For example, the first electrode tab 611 connected to the electrode assembly 401 may be drawn out through the first partition wall 241 to extend to the first inner surface 220a-1 of the first inner portion 220-1 of the battery case 201, and the second electrode tab 612 connected to the electrode assembly 401 may be drawn out through the second partition wall 242 to extend to the first inner surface 220a-1 of the first inner portion 220-1 of the battery case 201. According to another embodiment, each of the electrode tabs 610 connected to the electrode assembly 401 may include, with respect to the different partition walls 240 inside the battery case 201, one portion (e.g., a first portion 611-1 of the first electrode tab 611, or a first portion 612-1 of the second electrode tab 612) coupled to the corresponding partition wall among the partition walls 240 in one space where the electrode assembly 401 is disposed, and the remaining portion (e.g., a second portion 611-2 of the first electrode tab 611, or a second portion 612-2 of the second electrode tab 612) coupled to the corresponding partition wall among the partition walls 240 in the other space where the electrode assembly 401 is not disposed, to extend to one region of the inner surface 220a of the inner portion 220, and the one portion and the remaining portion of each of the electrode tabs 610 may be electrically connected to each other through the corresponding partition wall among the partition walls 240. For example, the first portion 611-1 of the first electrode tab 611 connected to the electrode assembly 401 may be coupled to the first partition wall 241 in the second space (S2) where the electrode assembly 401 is disposed, the second portion 611-2 of the first electrode tab 611 may be coupled to the first partition wall 241 in the first space (S1) to extend to the first inner surface 220a-1 of the first inner portion 220-1 of the battery case 201, the first portion 612-1 of the second electrode tab 612 connected to the electrode assembly 401 may be coupled to the second partition wall 242 in the second space (S2) where the electrode assembly 401 is disposed, and the second portion 612-2 of the second electrode tab 612 may be coupled to the second partition wall 242 in the first space (S1) to extend to the first inner surface 220a-1 of the first inner portion 220-1 of the battery case 201. According to an embodiment, the first electrode tab 611 may be physically and/or electrically connected to one of the positive electrodes 420 or the negative electrodes 430 of the electrode assembly 401, and the second electrode tab 612 may be physically and/or electrically connected to the other one of the positive electrodes 420 or the negative electrodes 430 of the electrode assembly 401. For example, the first electrode tab 611 may be connected to the positive electrodes 420 of the electrode assembly 401 to serve as a positive electrode tab, and the second electrode tab 612 may be connected to the negative electrode 430 of the electrode assembly 401 to serve as a negative electrode tab. In another example, the first electrode tab 611 may be connected to the negative electrodes 430 of the electrode assembly 401 to serve as a negative electrode tab, and the second electrode tab 612 may be connected to the positive electrodes 420 of the electrode assembly 401 to serve as a positive electrode tab.

According to an embodiment, an insulation treatment may be performed on regions of the battery case 201, other than at least a partial region of the partition walls 240 in which the electrode tabs 610 of the electrode assembly 401 are drawn out or coupled. For example, the insulation treatment may be performed on the outer portion 210, the inner portion 220, and the lower end portion 230 of the battery case 201, except for the partition walls 240.

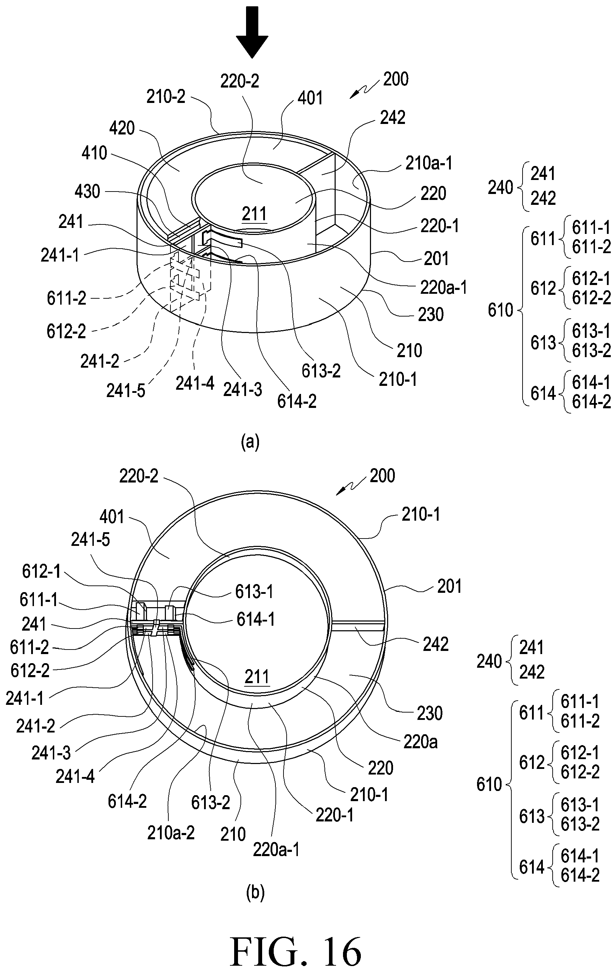

FIG. 16 illustrates the battery 200 including electrode tabs drawn out from the electrode assembly 401 of FIG. 4A, according to other embodiments of the disclosure. FIG. 16B illustrates the battery 200 of FIG. 16A when viewed in a direction indicated by the arrow.

Referring to FIG. 16, electrode tabs 610 (e.g., a first electrode tab 611, a second electrode tab 612, a third electrode tab 613, and a fourth electrode tab 614) connected to the electrode assembly 401 may be drawn out through one of the partition walls 240 inside the battery case 201, and extend to one region of the inner surface 210a of the outer portion 210 and one region of the inner surface 220a of the inner portion 220, respectively, included in a space inside the battery case 201 where the electrode assembly 401 is not disposed. For example, the first electrode tab 611 connected to the electrode assembly 401 may be drawn out through the first region 241-1 of the first partition wall 241 to extend to the first inner surface 210a-1 of the first outer portion 210-1 of the battery case 201, the second electrode tab 612 connected to the electrode assembly 401 may be drawn out through the second region 241-2 of the first partition wall 241 to extend to the first inner surface 210a-1 of the first outer portion 210-1 of the battery case 201, a third electrode tab 613 connected to the electrode assembly 401 may be drawn out through a third region 241-3 of the first partition wall 241 to extend to the first inner surface 220a-1 of the first inner portion 220-1 of the battery case 201, and a fourth electrode tab 614 connected to the electrode assembly 401 may be drawn out through a fourth region 241-4 of the first partition wall 241 to extend to the first inner surface 220a-1 of the first inner portion 220-1 of the battery case 201. According to another embodiment, each of the electrode tabs 610 connected to the electrode assembly 401 may include, with respect to a one of the partition walls 240 inside the battery case 201, one portion (e.g., a first portion 611-1 of the first electrode tab 611, a first portion 612-1 of the second electrode tab 612, a first portion 613-1 of the third electrode tab 613, or a first portion 614-1 of the fourth electrode tab 614) coupled to the one of the partition walls 240 in one space where the electrode assembly 401 is disposed, and the remaining portion (e.g., a second portion 611-2 of the first electrode tab 611, a second portion 612-2 of the second electrode tab 612, a second portion 613-2 of the third electrode tab 613, or a second portion 614-2 of the fourth electrode tab 614) coupled to the one of the partition walls 240 in the other space where the electrode assembly 401 is not disposed, to extend to one region of the inner surface 210a of the outer portion 210 and one region of the inner surface 220a of the inner portion 220, and the one portion and the remaining portion of each of the electrode tabs 610 may be electrically connected to each other through the one of the partition walls 240. For example, the first portion 611-1 of the first electrode tab 611 connected to the electrode assembly 401 may be coupled to the first region 241-1 of the first partition wall 241 in the second space (S2) where the electrode assembly 401 is disposed, the second portion 611-2 of the first electrode tab 611 may be coupled to the first region 241-1 of the first partition wall 241 in the first space (S1) to extend to the first inner surface 210a-1 of the first outer portion 210-1 of the battery case 201. The first portion 612-1 of the second electrode tab 612 that is connected to the electrode assembly 401 may be coupled to the second region 241-2 of the first partition wall 241 in the second space (S2) where the electrode assembly 401 is disposed. The second portion 612-2 of the second electrode tab 612 may be coupled to the second region 241-2 of the first partition wall 241 in the first space (S1) to extend to the first inner surface 210a-1 of the first outer portion 210-1 of the battery case 201. The first portion 613-1 of the third electrode tab 613 that is connected to the electrode assembly 401 may be coupled to the third region 241-3 of the first partition wall 241 in the second space (S2) where the electrode assembly 401 is disposed. The second portion 613-2 of the third electrode tab 613 may be coupled to the third region 241-3 of the first partition wall 241 in the first space (S1) to extend to the first inner surface 220a-1 of the first inner portion 220-1 of the battery case 201. The first portion 614-1 of the fourth electrode tab 614 connected to the electrode assembly 401 may be coupled to the fourth region 241-4 of the first partition wall 241 in the second space (S2) where the electrode assembly 401 is disposed. The second portion 614-2 of the fourth electrode tab 614 may be coupled to the fourth region 241-4 of the first partition wall 241 in the first space (S1) to extend to the first inner surface 220a-1 of the first inner portion 220-1 of the battery case 201. According to an embodiment, the first electrode tab 611 and the third electrode tab 613 may be physically and/or electrically connected to one of the positive electrodes 420 or the negative electrodes 430 of the electrode assembly 401, and the second electrode tab 612 and the fourth electrode tab 614 may be physically and/or electrically connected to the other one of the positive electrodes 420 or the negative electrodes 430 of the electrode assembly 401. For example, the first electrode tab 611 and the third electrode tab 613 may be connected to the positive electrodes 420 of the electrode assembly 401 to serve as a positive electrode tab, and the second electrode tab 612 and the fourth electrode tab 614 may be connected to the negative electrode 430 of the electrode assembly 401 to serve as a negative electrode tab. In another example, the first electrode tab 611 and the third electrode tab 613 may be connected to the negative electrodes 430 of the electrode assembly 401 to serve as a negative electrode tab, and the second electrode tab 612 and the fourth electrode tab 614 may be connected to the positive electrodes 420 of the electrode assembly 401 to serve as a positive electrode tab.

According to an embodiment, regions one of the partition walls 240 in which the electrode tabs 510 are drawn out or coupled, respectively, may be electrically separated from each other. For example, the fifth region 241-5 positioned between the first region 241-1, the second region 241-2, and the third region 241-3 of the first partition wall 241 in which the first electrode tab 611, the second electrode tab 612, and the third electrode tab 613 are drawn out, respectively, and the fourth region 241-4 in which the fourth electrode tab 614 is drawn out may undergo an insulation treatment so as to be electrically separated from the first region 241-1, the second region 241-2, the third region 241-3, and the fourth region 241-4.

According to an embodiment, an insulation treatment may be performed on regions of the battery case 201, other than at least a partial region of the one (e.g., the first partition wall 241 or the second partition wall 242) of the partition walls 240 in which the electrode tabs 610 of the electrode assembly 401 are drawn out or coupled. For example, the insulation treatment may be performed on the outer portion 210, the inner portion 220, the lower end portion 230, and the second partition wall 242 of the battery case 201, except for at least a partial region (e.g., the first region 241-1, the second region 241-2, the third region 241-3, and the fourth region 241-4) of the first partition wall 241.

Although FIGS. 5 to 16 describe various embodiments in which each of the electrode tabs (e.g., the electrode tabs 510 of FIGS. 5 to 10 and/or the electrode tabs 610 of FIGS. 11 to 16) connected to the electrode assembly (e.g., the electrode assembly 301 of FIGS. 5 to 10 and/or the electrode assembly 401 of FIGS. 11 to 16) of the battery 200 is drawn out through at least one of the partition walls 240 to extend or be coupled to one region of the inner surface 210a of the outer portion 210 and/or one region of the inner surface 220a of the inner portion 220 inside the battery case 201, the disclosure is not limited thereto. For example, an embodiment in which each of the electrode tabs (e.g., the electrode tabs 510 of FIGS. 5 to 10 and/or the electrode tabs 610 of FIGS. 11 to 16) is drawn out through at least one of the partition walls 240 to extend or be coupled to one region of the lower end portion 230 of the battery case 201 may also be possible as necessary.

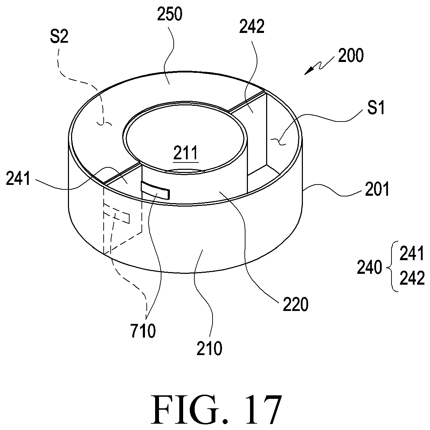

FIG. 17 illustrates the battery 200 of FIGS. 5 to 16 thermally sealed with a cap, according to various embodiments of the disclosure.

Referring to FIG. 17, the battery 200 may be completed by injecting electrolyte into one of a plurality of spaces (e.g., the first space (S1) and the second space (S2)) physically separated by a plurality of partition walls 240 (e.g., the first partition wall 241 and the second partition wall 242) of the battery case 201 in which the electrode assembly (e.g., the electrode assembly 301 of FIGS. 5 to 10 and/or the electrode assembly 401 of FIGS. 11 to 16) is disposed, and thermally sealing a bend-shaped cap 250 corresponding to at least a portion of the lower end portion 230 of the battery case 201 included in the corresponding space. For example, the bend-shaped cap 250 may correspond to a half of the ring-shaped lower end portion 230. According to an embodiment, the cap 250 may be formed of the same material as the battery case 201. For example, the battery 200 may be completed by injecting an electrolyte into the second space (S2) of the battery case 201 in which the electrode assembly (e.g., the electrode assembly 301 of FIGS. 5 to 10 and/or the electrode assembly 401 of FIGS. 11 to 16) is disposed, and covering, on the second space (S2), the cap 250 formed of a stainless material and having a shape corresponding to the half of the ring-shaped lower end portion 230, followed by sealing through laser welding. According to an embodiment, an insulation treatment may be performed on the cap 250.

Although FIG. 17 describes an embodiment (e.g., the embodiment of FIG. 6 and/or FIG. 12) in which each of electrode tabs 710 extends, with respect to one (e.g., the first partition wall 241) of the partition walls 240 inside the battery case 201 to one region of the inner surface 210a of the outer portion 210 or one region of the inner surface 220a of the inner portion 220 of the battery case 201, and FIG. 17 may be applicable to various embodiments (e.g., the embodiments of FIGS. 5 to 10 and/or FIGS. 11 to 16) of the disclosure described above.

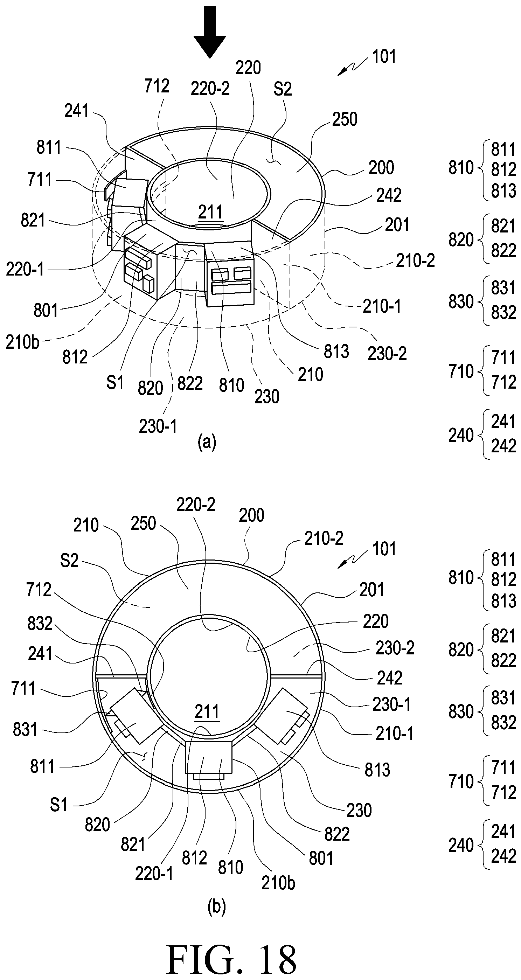

FIG. 18 illustrates a ring-shaped electronic device 101 including a circuit unit 801 in the battery 200 of FIG. 17, according to various embodiments of the disclosure.

Referring to FIG. 18, the ring-shaped electronic device 101 (e.g., the electronic device 101 of FIG. 1) may include a ring-shaped battery 200 and a circuit unit 801. According to an embodiment, an electrode assembly (not shown) (e.g., the electrode assembly 301 of FIG. 3A and/or the electrode assembly 401 of FIG. 4A) may be disposed in one space surrounded by one region of the lower end portion 230, one region of the outer portion 210, one region of the inner surface 220 of the battery case 201, the plurality of partition walls 240 (e.g., the first partition wall 241 and the second partition wall 242), and the cap 250, among the plurality of spaces (e.g., the first space (S1) and the second space (S2)) included in the ring-shaped battery 200. The circuit unit 801 may be disposed in another space surrounded by another region of the lower end portion 230, another region of the outer portion 210, another region of the inner portion 220 of the battery case 201, and the plurality of partition walls 240 (e.g., the first partition wall 241 and the second partition wall 242). For example, an electrode assembly (not shown) (e.g., the electrode assembly 301 of FIG. 3A and/or the electrode assembly 401 of FIG. 4A) may be disposed in the second space (S2) surrounded by the second lower end portion 230-2, the second outer portion 210-2, the second inner portion 220-2 of the battery case 201, the plurality of partition walls 240 (e.g., the first partition wall 241 and the second partition wall 242), and the cap 250, among the plurality of spaces (e.g., the first space (S1) and the second space (S2)) of the battery 200, and the circuit unit 801 may be disposed in the first space (S1) surrounded by the first lower end portion 230-1, the first outer portion 210-1, the first inner portion 220-1 of the battery case 201, and the plurality of partition walls 240 (e.g., the first partition wall 241 and the second partition wall 242), among the plurality of spaces (e.g., the first space (S1) and the second space (S2)) of the battery 200.

According to various embodiments, the circuit unit 801 may include a plurality of first printed circuit boards (e.g., the hard printed circuit board (PCB)) 810 and at least one second flexible printed circuit board (e.g., a flexible PCB (FPCB)) 820 configured to connect the plurality of first printed circuit boards 810. The first printed circuits boards 810 and/or the second flexible printed circuit boards 820 can include one or more power traces/power lines and/or one or more signal traces/signal lines. According to an embodiment, power and signals of each of the plurality of first printed circuit boards 810 may be connected through the at least one second printed circuit board 820 (e.g. via one or more power traces/power lines and/or signal traces/signal lines) to be disposed inside the ring-shaped battery case 201. For example, a 1-1th printed circuit board 811 may be connected to a 1-2th printed circuit board 812 through a 2-1th printed circuit board 821, and a 1-2th printed circuit board 812 may be connected to a 1-3th printed circuit board 813 through a 2-2th printed circuit board 822.

According to an embodiment, the plurality of first printed circuit boards 810 may be coupled and fixed to at least one surface of the battery case 201. For example, the 1-1th printed circuit board 811, the 1-2th printed circuit board 812, and the 1-3th printed circuit board 813 may be coupled and fixed to the inner portion 220 of the battery case 201. According to an embodiment, one or more main components (e.g., an integrated circuit (IC)) may be disposed on the plurality of first printed circuit boards 810 through a surface mount technology (SMT).

According to various embodiments, at least one of the plurality of first printed circuit boards 810 may be connected to the electrode tabs 710 (e.g., the first electrode tab 711 and the second electrode tab 712) of the electrode assembly (not shown) (e.g., the electrode assembly 301 of FIG. 3A and/or the electrode assembly 401 of FIG. 4A) drawn out through at least one of the plurality of partition walls 240 (e.g., the first partition wall 241 and the second partition wall 242) via at least one power contact unit 830. The power contact unit 830 can extend from the first printed circuit board 810 toward the inner portion 220 or the outer portion 210 to establish electrical connection with a corresponding electrode tab 710. For example, the 1-1th printed circuit board 811 among the plurality of first printed circuit boards 810 may include the power contact unit 830, the first power contact unit 831 of the power contact unit 830 may be electrically connected to a first electrode tab 711 of the electrode assembly (not shown) (e.g., the electrode assembly 301 of FIG. 3A and/or the electrode assembly 401 of FIG. 4A), and a second power contact unit 832 of the power contact unit 830 may be electrically connected to a second electrode tab 712 of the electrode assembly (not shown) (e.g., the electrode assembly 301 of FIG. 3A and/or the electrode assembly 401 of FIG. 4A).

According to an embodiment, the at least one power contact unit 830 may be electrically connected to a location of a main power source component (e.g., a power management integrated circuit (PMIC)) disposed on at least one (e.g., the 1-1th printed circuit board 811) of the plurality of first printed circuit boards 810 to receive power supplied from the electrode tabs 710 of the electrode assembly (not shown) (e.g., the electrode assembly 301 of FIG. 3A and/or the electrode assembly 401 of FIG. 4A). According to an embodiment, the power supply path (e.g., established via power traces/power lines) can be optimized (or minimized) by connecting at least one power contact unit 830 (e.g., including power traces/power lines) to the location of the main power source component disposed on at least one of the plurality of first printed circuit boards 810, thereby shortening the charging time and/or reducing heat generation.

According to various embodiments, the electronic device 101 may include additional components outside the battery case 201 along at least one region of the outer surface 210b of the outer portion 210. For example, the electronic device 101 may include a flexible display module (e.g., the display module 160 of FIG. 1) disposed outside the battery case 201 along at least one region of the outer surface 210b of the outer portion 210 and connected to the plurality of hard PCBs 810.

FIG. 18 describes an embodiment in which at least one of the plurality of first printed circuit boards 810 is connected to the electrode tabs 710 extending to one region of the inner surface 210a of the outer portion 210 and one region of the inner surface 220a of the inner portion 220 of the battery case 201, respectively, with respect to one of the partition walls 240 inside the battery case 201 through the power contact unit 830, and FIG. 18 may be applicable to various embodiments (e.g., embodiment(s) of FIGS. 5 to 10 and/or FIGS. 11 to 16 ) of the disclosure described above.

In the implementation of the ring-shaped electronic device (e.g., the electronic device 101 of FIG. 18), the space for arranging the circuit unit needs to be increased for the electronic device to provide various functions, and the space for arranging the circuit unit needs to be minimized for the electronic device to provide only a minimum function and be used for a long time. As such, the space for arranging the circuit unit providing the corresponding function may vary according to the purpose and use of the ring-shaped electronic device. According to disclosure an embodiment, a space in which an electrode assembly may be disposed may be adjusted by changing the positions and/or sizes of a plurality of partition walls disposed in a battery case of a battery (e.g., the battery 200 of FIGS. 2 to 18) forming the appearance of a ring-shaped electronic device, thereby adjusting a space for arranging a circuit unit.

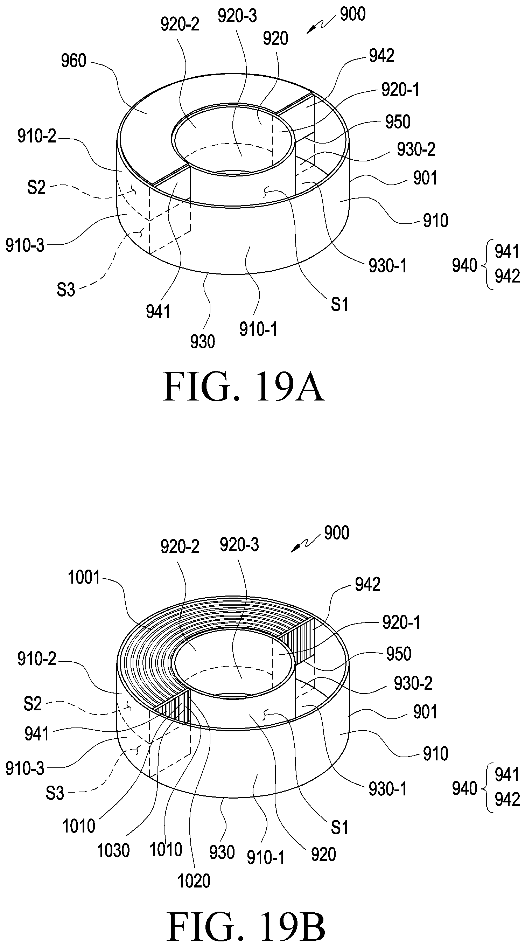

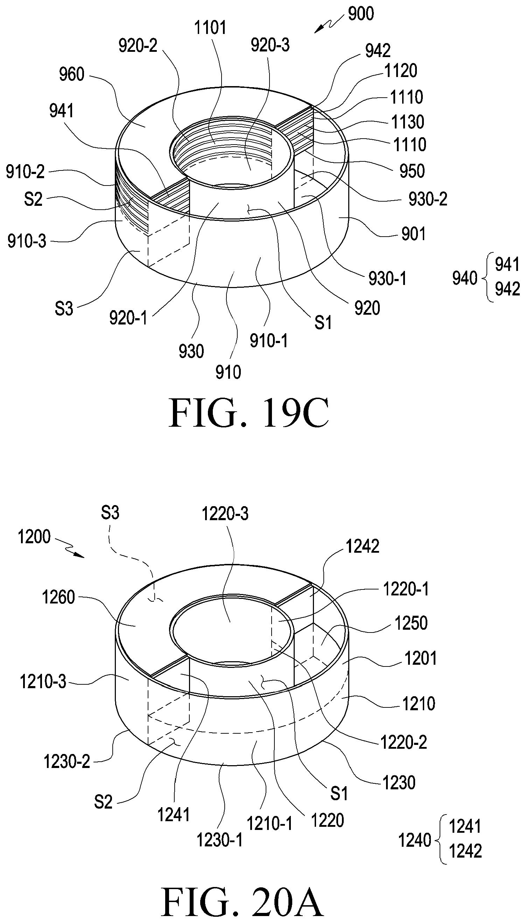

FIG. 19A illustrates an example of a battery 900 included in a ring-shaped electronic device according to various embodiments of the disclosure. FIG. 19B is a perspective view of an electrode assembly included in the battery 900 of FIG. 19A, according to various embodiments of the disclosure. FIG. 19C is a perspective view of an electrode assembly included in the battery 900 of FIG. 19A, according to still other embodiments of the disclosure.

Referring to FIG. 19A, the ring-shaped battery 900 (e.g., the battery 200 of FIG. 2) may include a cylindrical battery case 901 having a ring-shaped first lower end portion 930. According to an embodiment, the battery case 901 may include the outer portion 910 located along outer rim of the ring-shaped first lower end portion 930 and an inner portion 920 located along the inner rim of the ring-shaped first lower end portion 930.

According to various embodiments, a plurality of partition walls 940 may be disposed between the outer portion 910 and the inner portion 920 of the battery case 901. For example, the plurality of partition walls 940 may include a first partition wall 941 and a second partition wall 942. According to an embodiment, each of the first partition wall 941 and the second partition wall 942 may be disposed between the outer portion 910 and the inner portion 920 to be at a position corresponding to a portion of the height of the battery 900 from the first lower end portion 930 so as to connect the outer portion 910 and the inner portion 920. For example, each of the first partition wall 941 and the second partition wall 942 may be positioned between the outer portion 910 and the inner portion 920 to be at a position corresponding to a half of the height of the battery 900 from the first lower end portion 930. According to an embodiment, the battery case 901 of the battery 900 may include a second lower end portion 950 having a bend shape corresponding to at least a portion of the first lower end portion 930. For example, the second lower end portion 950 may correspond to a half of the ring-shaped first lower end portion 930. According to an embodiment, the second lower end portion 950 may extend from the first partition wall 941 and the second partition wall 942, and may be disposed parallel to the first lower end portion 930 at substantially the same height as the first partition wall 941 and the second partition wall 942 from the first lower end portion 930. For example, the second lower end portion 950 may be disposed parallel to the first lower end portion 930 at a position corresponding to a half of the height of the battery 900 from the first lower end portion 930.

According to an embodiment, the battery case 901 of the battery 900 may include a cap 960 having a shape corresponding to the second lower end portion 950 having a bend shape. For example, the cap 960 may correspond to a half of the ring-shaped first lower end portion 930. According to an embodiment, the cap 960 may be parallel to the second lower end portion 950, and may be thermally sealed to at least a portion of the outer portion 910, at least a portion of the inner portion 920, and at least a portion of each of the plurality of partition walls 940 at a position corresponding to the height of the battery 900. According to an embodiment, physically separated spaces may be formed inside the battery case 901 by the first partition wall 941 and the second partition wall 942. According to an embodiment, the spaces inside the battery case 901 which are physically separated by the first partition wall 941 and the second partition wall 942 may include a first space (S1), a second space (S2), and a third space (S3), and the sizes of the first space (S1), the second space (S2), and the third space (S3) may be the same or different. For example, when the outer portion 910 is divided into a first outer portion 910-1, a second outer portion 910-2, and a third outer portion 910-3, and the inner portion 920 is divided into a first inner portion 920-1, a second inner portion 920-2, and a third inner portion 920-3, with reference to the plurality of partition walls 940, the first space (S1) may be a space surrounded by the first partition wall 941, an imaginary surface extending to the first lower end portion 930 from the first partition wall 941, the first outer portion 910-1, the second partition wall 942, an imaginary surface extending to the first lower end portion 930 to the second partition wall 942, the first inner portion 920-1, and a first region 930-1 of the first lower side 930, the second space (S2) may be a space surrounded by the first partition wall 941, the second outer portion 920-2, the second partition wall 942, the second inner portion 920-2, the second lower end portion 950, and the cap 960, and the third space (S3) may be a space surrounded by an imaginary surface extending from the first partition wall 941 to the first lower end portion 930, the third outer portion 910-3, an imaginary surface extending from the second partition wall 942 to the first lower end portion 930, the third inner portion 920-3, a second region 930-2 of the first lower end portion 930, and the second lower end portion 950. According to an embodiment, the first space (S1) and the third space (S3) may substantially form one space.

The embodiment of FIG. 19A shows that the plurality of partition walls 940 are arranged along the diameter of the first lower end portion 930 so that the second space (S2) and the third space (S2) are separated to substantially have the same size.

According to various embodiments, the outer portion 910, the inner portion 920, the first lower end portion 930, and the plurality of partition walls 940 (e.g., the first partition wall 941 and the second partition wall 942) included in the battery case 901 may be manufactured in a single combined form during the manufacturing process. According to an embodiment, the outer portion 910, the inner portion 920, the first lower end portion 230, and the plurality of partition walls 940 (e.g., the first partition wall 941 and the second partition wall 942) included in the battery case 901 may be formed of the same material. For example, the outer portion 910, the inner portion 920, the first lower end portion 930, the plurality of partition walls 940 (e.g., the first partition wall 941 and the second partition wall 942), and the second lower end portion 950 included in the battery case 901 may be formed of the same material which is stainless steel.

Referring to FIG. 19B, an electrode assembly 1001 may be disposed in one of the spaces (e.g., the first space (S1), the second space (S2), and the third space (S3)) in the battery case 901, which are physically separated by the plurality of partition walls 940 (e.g., the first partition wall 241 and the second partition wall 942). For example, the electrode assembly 1001 may be disposed in the second space (S2) inside the battery case 901.

According to various embodiments, the electrode assembly 1001 may have a stack-type or stack/folding-type structure formed by a positive electrode 1020, a negative electrode 1030, and at least one separator 1010 interposed therebetween, which are sequentially stacked in parallel with the inner portion 920 and the outer portion 910 while being positioned between at least a portion of the inner portion 920 of the battery case 901 and at least a portion of the outer portion 910 of the battery case 901 corresponding thereto. For example, the electrode assembly 1001 may have a stack-type or stack/folding-type structure in which the separator 1010, the positive electrode 1020, the separator 1010, the negative electrode 1030, the separator 1010, and the positive electrode 1020 are sequentially stacked in parallel with the second inner portion 920-2 and the second outer portion 910-2 while being disposed between the second inner portion 920-2 of the battery case 901 included in the second space (S2) and the second outer portion 910-2 of the battery case 901 included in the second space (S2).

Referring to FIG. 19C, an electrode assembly 1101 may be disposed in one of the spaces (e.g., the first space (S1), the second space (S2), and the third space (S3)) in the battery case 901, which are physically separated by the plurality of partition walls 940 (e.g., the first partition wall 941 and the second partition wall 942). For example, the electrode assembly 1101 may be disposed in the second space (S2) inside the battery case 901.

According to various embodiments, the electrode assembly 1101 may include a bend-shaped separator 1110, positive electrode 1120, and negative electrode 1130 corresponding to the second lower end portion 950 of the battery case 901, and may have a stack-type or stack/folding-type structure formed by the positive electrode 10120, the negative electrode 1130, and at least one separator 1110 interposed therebetween, which are sequentially stacked in parallel with the second lower end portion 950 of the battery case 901. For example, the electrode assembly 1101 may have a stack-type or stack/folding-type structure in which the separator 1110, the positive electrode 1120, the separator 1110, the negative electrode 1130, the separator 1110, and the positive electrode 1120 are sequentially stacked in parallel with the second lower end portion 950 of the battery case 901 included in the second space (S2).

Although the electrode tabs connected to the electrode assembly 1101 are not shown in FIGS. 19A to 19C, various embodiments (e.g., embodiment(s) of FIGS. 5 to 10 and/or 11 to FIGS. 16) of the disclosure described above in FIGS. 19A to 19C may be applied. For example, the electrode tabs connected to the electrode assembly 1101 may be drawn out through at least one of the partition walls 940 to extend along one surface of the outer part 910.

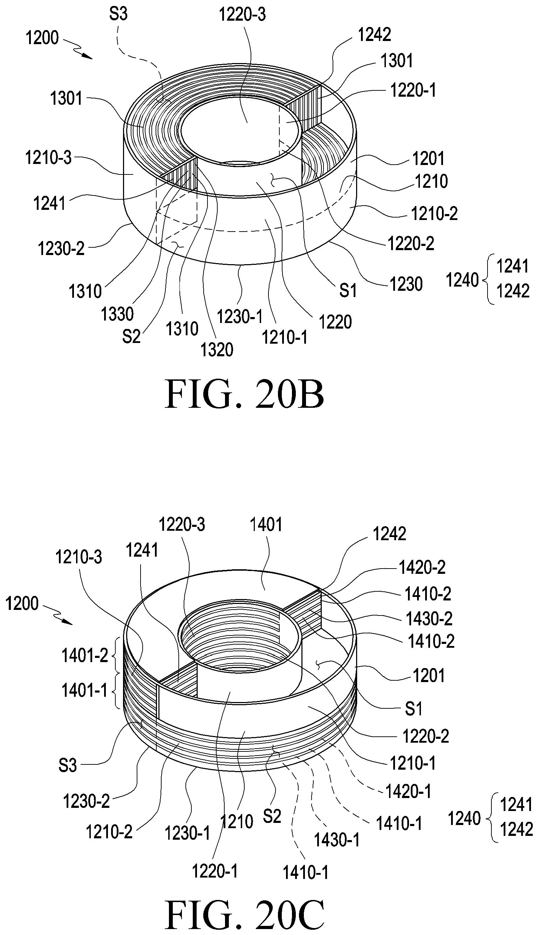

FIG. 20A illustrates another example of a battery 1200 included in a ring-shaped electronic device according to various embodiments of the disclosure. FIG. 20B is a perspective view of an electrode assembly included in the battery 1200 of FIG. 20A, according to various embodiments of the disclosure. FIG. 20C is a perspective view of an electrode assembly included in the battery 1200 of FIG. 20A, according to still other embodiments of the disclosure.

Referring to FIG. 20A, the ring-shaped battery 1200 (e.g., the battery 200 of FIG. 2) may include a cylindrical battery case 1201 having a ring-shaped first lower end portion 1230. According to an embodiment, the battery case 1201 may include an outer portion 1210 positioned along the outer rim of the ring-shaped first lower end portion 1230, and an inner portion 1220 positioned along the inner rim of the ring-shaped first lower end portion 1230.

According to various embodiments, a plurality of partition walls 1240 may be disposed between the outer portion 1210 and the inner portion 1220 of the battery case 1201. For example, the plurality of partition walls 1240 may include a first partition wall 1241 and a second partition wall 1242. According to an embodiment, each of the first partition wall 1241 and the second partition wall 1242 may be disposed between the outer portion 1210 and the inner portion 1220 to be at a position corresponding to a portion of the height of the battery 1200 from the first lower end portion 1230 so as to connect the outer portion 1210 and the inner portion 1220. For example, each of the first partition wall 1241 and the second partition wall 1242 may be positioned between the outer portion 1210 and the inner portion 1220 to be at a position corresponding to a half of the height of the battery 1200 from the first lower end portion 1230. According to an embodiment, the battery case 1201 of the battery 1200 may include a second lower end portion 1250 having a bend shape corresponding to at least a portion of the first lower end portion 1230. For example, the second lower end portion 1250 may correspond to a half of the ring-shaped first lower end portion 1230. According to an embodiment, the second lower end portion 1250 may extend from the first partition wall 1241 and the second partition wall 1242, and may be disposed parallel to the first lower end portion 1230 at substantially the same height as the first partition wall 1241 and the second partition wall 1242 from the first lower end portion 1230. For example, the second lower end portion 1250 may be disposed parallel to the first lower end portion 1230 at a position corresponding to a half of the height of the battery 1200 from the first lower end portion 1230. According to an embodiment, the battery case 1201 of the battery 1200 may include a cap 1260 having a shape corresponding to a portion of the first lower end portion 1230, excluding a portion corresponding to the second lower end portion 1250. For example, the cap 1260 may correspond to a half of the ring-shaped first lower end portion 1230. According to an embodiment, the cap 1260 may be parallel to a portion of the first lower end portion 1230, excluding a portion corresponding to the second lower end portion 1250, and may be thermally sealed to at least a portion of the outer portion 1210, at least a portion of the inner portion 1220, and at least a portion of each of the plurality of partition walls 1240 at a position corresponding to the height of the battery 1200.

According to an embodiment, physically separated spaces may be formed inside the battery case 1201 by the first partition wall 1241 and the second partition wall 1242. According to an embodiment, the spaces inside the battery case 1201 which are physically separated by the first partition wall 1241 and the second partition wall 1242 may include a first space (S1), a second space (S2), and a third space (S3), and the sizes of the first space (S1), the second space (S2), and the third space (S3) may be the same or different. For example, when the outer portion 1210 is divided into a first outer portion 1210-1, a second outer portion 1210-2, and a third outer portion 1210-3, and the inner portion 1220 is divided into a first inner portion 1220-1, a second inner portion 1220-2, and a third inner portion 1220-3, with reference to the plurality of partition walls 1240, the first space (S1) may be a space surrounded by the first partition wall 1241, the first outer portion 1210-1, the second partition wall 1242, the first inner portion 1220-1, and the second lower side 1250, the second space (S2) may be a space surrounded by an imaginary surface extending from the first partition wall 1241 to the first lower end portion 1230, an imaginary surface extending from the second partition wall 1242 to the first lower end portion 1230, the second inner portion 1220-2, the second lower end portion 1250, and a first region 1230-1 of the first lower end portion 1230, and the third space (S3) may be a space surrounded by the first partition wall 1241, an imaginary surface extending from the first partition wall 1241 to the first lower end portion 1230, the third outer portion 1210-3, the second partition wall 1242, an imaginary surface extending from the second partition wall 1242 to the first lower end portion 1230, the third inner portion 1220-3, a second region 1230-2 of the first lower end portion 1230, and the cap 1260. According to an embodiment, the first space (S1) and the third space (S3) may substantially form one space.

The embodiment of FIG. 20A shows that the plurality of partition walls 1240 are arranged along the diameter of the first lower end portion 1230 so that the first space (S1) and the second space (S2) are separated to substantially have the same size.

According to various embodiments, the outer portion 1210, the inner portion 1220, the first lower end portion 1230, and the plurality of partition walls 1240 (e.g., the first partition wall 1241 and the second partition wall 1242) included in the battery case 1201 may be manufactured in a single combined form during the manufacturing process. According to an embodiment, the outer portion 1210, the inner portion 1220, the first lower end portion 1230, and the plurality of partition walls 1240 (e.g., the first partition wall 1241 and the second partition wall 1242) included in the battery case 1201 may be formed of the same material. For example, the outer portion 1210, the inner portion 1220, the first lower end portion 1230, and the plurality of partition walls 1240 (e.g., the first partition wall 1241 and the second partition wall 1242) included in the battery case 1201 may be formed of the same material which is stainless steel.

Referring to FIG. 20B, an electrode assembly 1301 may be disposed in one of the spaces (e.g., the first space (S1), the second space (S2), and the third space (S3)) in the battery case 1201, which are physically separated by the plurality of partition walls 1240 (e.g., the first partition wall 1241 and the second partition wall 1242). For example, the electrode assembly 1301 may be disposed in the second space (S2) and the third space (S3) inside the battery case 1201.

According to various embodiments, the electrode assembly 1301 may have a stack-type or stack/folding-type structure formed by a positive electrode 1320, a negative electrode 1330, and at least one separator 1310 interposed therebetween, which are sequentially stacked in parallel with the inner portion 1220 and the outer portion 1210 while being positioned between at least a portion of the inner portion 1220 of the battery case 1201 and at least a portion of the outer portion 1210 of the battery case 1201 corresponding thereto. For example, the electrode assembly 1301 may have a stack-type or stack/folding-type structure in which the separator 1310, the positive electrode 1320, the separator 1310, the negative electrode 1330, the separator 1310, and the positive electrode 1320 are sequentially stacked in parallel with the second inner portion 1220-2 and the third inner portion 1220-3 and the second outer portion 1210-2 and the third outer portion 1210-3 while being disposed between the second inner portion 1220-2 and the third inner portion 1220-3 of the battery case 1201 included in the second space (S2) and the third space (S3) and the second outer portion 1210-2 and the third outer portion 1210-3 of the battery case 1201 included in the second space (S2) and the third space (S3).

Referring to FIG. 20C, an electrode assembly 1401 may be disposed in one of the spaces (e.g., the first space (S1), the second space (S2), and the third space (S3)) in the battery case 901, which are physically separated by the plurality of partition walls 1240 (e.g., the first partition wall 1241 and the second partition wall 1242). For example, the electrode assembly 1101 may be disposed in the second space (S2) inside the battery case 1201.

According to various embodiments, the electrode assembly 1401 may include a first electrode assembly 1401-1 including one or more ring-shaped first separator 1410-1, first positive electrodes 1420-1, and second negative electrodes 1430-1 corresponding to the first lower end portion 1230 of the battery case 1201, and a second electrode assembly 1401-2 including one or more bend-shaped second separators 1410-2, second positive electrodes 1420-2, and second negative electrodes 1430-2 corresponding to the cap 1260 of the battery case 1201. According to an embodiment, the first electrode assembly 1401-1 may have a stack-type or stack/folding-type structure formed by the first positive electrode 1420-1, the first negative electrode 1430-1, and at least one first separator 1410-1 interposed therebetween, which are sequentially stacked in parallel with the first lower end portion 1230 up to the plurality of partition walls 1240. For example, the first electrode assembly 1401-1 may have a stack-type or stack/folding-type structure in which the first separators 1410-1, the first positive electrodes 1420-1, and the first negative electrodes 1430-1 are sequentially stacked in parallel with the first lower end portion 1230 of the battery case 201 in the order of the first separator 1410-1, the first positive electrode 1420-1, and the first separator 1410-1, the first negative electrode 1430-1, the first separator 1410-1, and the first positive electrode 1420-1 from the first lower end portion 1230 of at least a portion of the second space (S2) and the third space (S3) up to the plurality of partition walls 1240. According to an embodiment, the second electrode assembly 1401-2 may have a stack-type or stack/folding-type structure formed by the second positive electrode 1420-2, the second negative electrode 1430-2, and at least one second separator 1410-2 interposed therebetween, which are sequentially stacked in parallel with at least one portion of the first lower end portion 1230 from at least one portion of the first electrode assembly 1401-1 up to the cap 1260. For example, the second electrode assembly 2101 may have a stack-type or stack/folding-type structure in which the second separators 1420-1, the second positive electrodes 1420-2, and the second negative electrodes 1430-2 are sequentially stacked in parallel with at least one portion of the first lower end portion 1230 of the battery case 1201 in the order of the second separator 1410-2, the second positive electrode 1420-2, and the second separator 1410-2, the second negative electrode 1430-2, the second separator 1410-2, and the second positive electrode 1420-2 from at least one portion of the first electrode assembly 1401-1 of at least the other portion of the third space (S3) up to the cap 1260. According to an embodiment, the first electrode assembly 1401-1 and the second electrode assembly 1402-1 may be one electrode assembly formed integrally with each other or may be separate electrode assemblies.

According to various embodiments of the disclosure, a battery (e.g., the battery 200 of FIG. 2) may include a battery case (e.g., the battery case 201 of FIG. 2) has a ring-shape, which is includes a plurality of spaces physically separated by a plurality of partition walls (e.g., the partition walls 240 of FIG. 2), and an electrode assembly (e.g., the electrode assembly 301 of FIG. 3 and/or the electrode assembly 401 of FIG. 4) having a structure formed by stacking a plurality of electrode plates accommodated in at least one space of the plurality of spaces of the battery case. The electrode assembly may include electrode tabs (e.g., the electrode tabs 510 of FIGS. 5 to 10 and/or the electrode tabs 610 of FIGS. 11 to 16) drawn out through at least one of the plurality of partition walls along one surface inside the battery case into an another space adjacent to the at least one space in which the electrode assembly is accommodated.

In the battery according to various embodiments, the battery case may further include a cap (e.g., the cap 250 of FIG. 17) configured to cover the at least first space in which the electrode assembly is accommodated.

In the battery according to various embodiments, the battery case may be formed of a stainless steel material.

In the battery according to various embodiments, the electrode tabs may include at least one positive electrode tab and at least one negative electrode tab.

In the battery according to various embodiments, the electrode tabs may be drawn out through an identical partition wall among the plurality of partition walls, and may extend along one surface of an inner portion inside the battery case.

In the battery according to various embodiments, the electrode tabs may be drawn out through an identical partition wall among the plurality of partition walls, and may extend along one surface of an outer portion inside the battery case.

In the battery according to various embodiments, the at least one positive electrode tab and the at least one negative electrode tab among the electrode tabs may be drawn out through different partition walls among the plurality of partition walls, respectively, and may extend along one surface of the inner portion inside the battery case.

In the battery according to various embodiments, the at least one positive electrode tab and the at least one negative electrode tab among the electrode tabs may be drawn out through different partition walls among the plurality of partition walls, respectively, and may extend along one surface of the outer portion inside the battery case.

In the battery according to various embodiments, the at least one space in which the electrode assembly is received may have substantially an identical size to the another space adjacent to the at least one space in which the electrode assembly is received.

In the battery according to various embodiments, the at least one space in which the electrode assembly is received may have substantially a different size from the another space adjacent to the at least one space in which the electrode assembly is disposed.

According to various embodiments of the disclosure, an electronic device (e.g., the electronic device 101 of FIGS. 1 and 18) may include a battery case (e.g., the battery case 201 of FIG. 18) has a ring shape, an electrode assembly (e.g., the electrode assembly 301 of FIG. 3 and/or the electrode assembly 401 of FIG. 4) formed by stacking a plurality of electrode plates, and a circuit unit (e.g., the circuit unit 801 of FIG. 18), wherein the battery case may include, among a plurality of spaces physically separated by a plurality of partition walls, a first space in which the electrode assembly is received, and a second space in which the circuit unit is received, and the electrode assembly may be electrically connected to the circuit unit through electrode tabs (e.g., the electrode tabs 710 of FIG. 18) drawn out into the second space through at least one of the plurality of partition walls (e.g., the partition walls 240 of FIG. 18) along one surface inside battery case.

In the electronic device according to various embodiments, the battery case may further include a cap (e.g., the cap 250 of FIG. 18) configured to cover the at least first space in which the electrode assembly is received.

In the electronic device according to various embodiments, the battery case may be formed of a stainless steel material.

In the electronic device according to various embodiments, the electrode tabs may include at least one positive electrode tab and at least one negative electrode tab.

In the electronic device according to various embodiments, the electrode tabs may be drawn out through an identical partition wall among the plurality of partition walls, and may extend along one surface of an inner portion inside the battery case.

In the electronic device according to various embodiments, the electrode tabs may be drawn out through an identical partition wall among the plurality of partition walls, and may extend along one surface of an outer portion inside the battery case.

In the electronic device according to various embodiments, the at least one positive electrode tab and the at least one negative electrode tab among the electrode tabs may be drawn out through different partition walls among the plurality of partition walls, respectively, and may extend along one surface of the inner portion inside the battery case.

In the electronic device according to various embodiments, the at least one positive electrode tab and the at least one negative electrode tab among the electrode tabs may be drawn out through different partition walls among the plurality of partition walls, respectively, and may extend along one surface of the outer portion inside the battery case.

In the electronic device according to various embodiments, the circuit unit may include a plurality of first printed circuit boards (e.g., the first printed circuit board 810 of FIG. 18), and at least one flexible second printed circuit board (e.g., the second printed circuit board 820 of FIG. 18) configured to connect the plurality of first printed circuit boards.

In the electronic device according to various embodiments, at least one of the plurality of first printed circuit boards may include a contact unit (e.g., the power contact unit 830 of FIG. 18) electrically connected to the plurality of electrode tabs.

According to various embodiments of the disclosure, an electronic device (e.g., the electronic device 101 of FIGS. 1 and 18) may include a battery case including a plurality of inner surfaces defining an inner spacing extending circumferentially about a hollow void; first and second partition walls disposed in the inner spacing, the first and second partition walls separating the inner spacing into a first space located at a first side of the first and second partition walls and a second space located an opposing second side of the first and second partition walls; at least one electrode tab disposed against at least one of the inner surfaces, the at least one electrode tab extending from a first end disposed in the first space to a second end disposed in the second space to define an electrically conductive path extending past at least one of the first partition wall and the second partition wall; an electrode assembly disposed in the first space and electrically coupled to the first end of the at least one electrode tab; and a circuit unit disposed in the second space and electrically coupled to the second end of the at least one electrode tab.

In the electronic device according to various embodiments, the first partition wall is disposed in the inner spacing at a first location and the second partition wall disposed in the inner spacing at a second location different from the first location.

In the electronic device according to various embodiments, at least one of the first partition wall and the second partition wall includes at least one opening, and wherein the at least one electrical tab is drawn through the at least one opening.

In the electronic device according to various embodiments, wherein the at least one inner surface includes an inner case wall spaced apart from an outer case wall by the inner spacing.

In the electronic device according to various embodiments, the circuit unit includes at least one contact unit extending toward at least one of the inner wall and the outer wall and contacting the second end of the at least one electrode tab.

In the electronic device according to various embodiments, the electronic device further comprises a second circuit unit disposed in the second space; and a flexible second printed circuit board including an electrically conductive trace that electrically connects the first circuit unit to the second circuit unit.

In the electronic device according to various embodiments, the electrode assembly includes a stack of individual electrode plates.

The electronic device according to various embodiments of the disclosure described above is not limited by the above-described embodiments and drawings, and it will be apparent to those of ordinary skill in the art to which the disclosure belongs that various substitutions, modifications, and changes are possible within the technical scope of the disclosure.

## Claims

1. A battery (200) comprising:
a battery case (201) has a ring-shape, which comprises a plurality of spaces physically separated by a plurality of partition walls (240); and
an electrode assembly (301; 401) having a structure formed by stacking a plurality of electrode plates accommodated in at least one space of the plurality of spaces of the battery case (201),
wherein the electrode assembly (301; 401) comprises electrode tabs (510; 610; 710) drawn out through at least one of the plurality of partition walls (240) along one surface inside the battery case (201) into an another space adjacent to the at least one space in which the electrode assembly (301; 401) is accommodated.

2. The battery (200) of claim 1, wherein the battery case (201) further comprises a cap (250) configured to cover the at least one first space in which the electrode assembly (301; 401) is accommodated.

3. The battery (200) of claim 2, wherein the battery case (201) is formed of a stainless steel material.

4. The battery (200) of claim 1, wherein the electrode tabs (510; 610; 710) comprise at least one positive electrode tab and at least one negative electrode tab.

5. The battery (200) of claim 4, wherein the electrode tabs (510; 610; 710) are drawn out through an identical partition wall among the plurality of partition walls (240), and extend along one surface of an inner portion inside the battery case (201).

6. The battery (200) of claim 4, wherein the electrode tabs (510; 610; 710) are drawn out through an identical partition wall among the plurality of partition walls (240), and extend along one surface of an outer portion inside the battery case (201).

7. The battery (200) of claim 4, wherein the at least one positive electrode tab and the at least one negative electrode tab among the electrode tabs (510; 610; 710) are drawn out through different partition walls (240) among the plurality of partition walls (240), respectively, and extend along one surface of an inner portion inside the battery case (201).

8. The battery (200) of claim 4, wherein the at least one positive electrode tab and the at least one negative electrode tab among the electrode tabs (510; 610; 710) are drawn out through different partition walls (240) among the plurality of partition walls (240), respectively, and extend along one surface of an outer portion inside the battery case (201).

9. The battery (200) of claim 1, wherein the at least one space in which the electrode assembly (301; 401) is accommodated has substantially an identical size to the another space adjacent to the at least one space in which the electrode assembly (301; 401) is accommodated.

10. The battery (200) of claim 1, wherein the at least one space in which the electrode assembly (301; 401) is accommodated has substantially a different size from the another space adjacent to the at least one space in which the electrode assembly (301; 401) is accommodated.

11. An electronic device (101) comprising the battery (200) according to any one of claims 1 to 10, further comprising
a circuit unit (801),
wherein the electrode assembly (301; 401) is electrically connected to the circuit unit (801) through the electrode tabs (710) drawn out into the another space.

12. The electronic device (101) of claim 11, wherein the circuit unit (801) comprises a plurality of first printed circuit boards (810), and one or more flexible second printed circuit boards (820) configured to connect the plurality of first printed circuit boards (810).

13. The electronic device (101) of claim 12, wherein at least one of the plurality of first printed circuit boards (810) comprises a contact unit (830) electrically connected to the electrode tabs (710).

## Patentansprüche

1. Batterie (200), umfassend:
ein Batteriegehäuse (201), das eine Ringform hat und mehrere Räume umfasst, die durch mehrere Trennwände (240) physisch getrennt sind; und
eine Elektrodenanordnung (301; 401) mit einer Struktur, die durch Stapeln einer Vielzahl von Elektrodenplatten gebildet wird, die in mindestens einem Raum der mehreren Räume des Batteriegehäuses (201) untergebracht sind,
wobei die Elektrodenanordnung (301; 401) Elektrodenlaschen (510; 610; 710) umfasst, die durch mindestens eine der mehreren Trennwände (240) entlang einer Oberfläche innerhalb des Batteriegehäuses (201) in einen weiteren Raum herausgeführt sind, der an den mindestens einen Raum angrenzt, in dem die Elektrodenanordnung (301; 401) untergebracht ist.

2. Batterie (200) nach Anspruch 1, wobei das Batteriegehäuse (201) ferner eine Kappe (250) umfasst, die dazu konfiguriert ist, den mindestens einen ersten Raum abzudecken, in dem die Elektrodenanordnung (301; 401) untergebracht ist.

3. Batterie (200) nach Anspruch 2, wobei das Batteriegehäuse (201) aus einem Edelstahlmaterial gebildet ist.

4. Batterie (200) nach Anspruch 1, wobei die Elektrodenlaschen (510; 610; 710) mindestens eine positive Elektrodenlasche und mindestens eine negative Elektrodenlasche umfassen.

5. Batterie (200) nach Anspruch 4, wobei die Elektrodenlaschen (510; 610; 710) durch eine identische Trennwand unter den mehreren Trennwänden (240) herausgeführt sind und sich entlang einer Oberfläche eines inneren Abschnitts innerhalb des Batteriegehäuses (201) erstrecken.

6. Batterie (200) nach Anspruch 4, wobei die Elektrodenlaschen (510; 610; 710) durch eine identische Trennwand unter den mehreren Trennwänden (240) herausgeführt sind und sich entlang einer Oberfläche eines äußeren Abschnitts innerhalb des Batteriegehäuses (201) erstrecken.

7. Batterie (200) nach Anspruch 4, wobei die mindestens eine positive Elektrodenlasche und die mindestens eine negative Elektrodenlasche unter den Elektrodenlaschen (510; 610; 710) jeweils durch unterschiedliche Trennwände (240) unter den mehreren Trennwänden (240) herausgeführt sind und sich entlang einer Oberfläche eines inneren Abschnitts innerhalb des Batteriegehäuses (201) erstrecken.

8. Batterie (200) nach Anspruch 4, wobei die mindestens eine positive Elektrodenlasche und die mindestens eine negative Elektrodenlasche unter den Elektrodenlaschen (510; 610; 710) jeweils durch unterschiedliche Trennwände (240) unter den mehreren Trennwänden (240) herausgeführt sind und sich entlang einer Oberfläche eines äußeren Abschnitts innerhalb des Batteriegehäuses (201) erstrecken.

9. Batterie (200) nach Anspruch 1, wobei der mindestens eine Raum, in dem die Elektrodenanordnung (301; 401) untergebracht ist, im Wesentlichen eine identische Größe aufweist wie der weitere Raum, der an den mindestens einen Raum angrenzt, in dem die Elektrodenanordnung (301; 401) untergebracht ist.

10. Batterie (200) nach Anspruch 1, wobei der mindestens eine Raum, in dem die Elektrodenanordnung (301; 401) untergebracht ist, im Wesentlichen eine andere Größe aufweist als der weitere Raum, der an den mindestens einen Raum angrenzt, in dem die Elektrodenanordnung (301; 401) untergebracht ist.

11. Elektronische Vorrichtung (101) mit der Batterie (200) nach einem der Ansprüche 1 bis 10, umfassend ferner
eine Schaltungseinheit (801),
wobei die Elektrodenanordnung (301; 401) über die in den weiteren Raum herausgeführten Elektrodenlaschen (710) elektrisch mit der Schaltungseinheit (801) verbunden ist.

12. Elektronische Vorrichtung (101) nach Anspruch 11, wobei die Schaltungseinheit (801) eine Vielzahl von ersten Leiterplatten (810) und eine oder mehrere flexible zweite Leiterplatten (820), die zum Verbinden der Vielzahl von ersten Leiterplatten (810) konfiguriert sind, umfasst.

13. Elektronische Vorrichtung (101) nach Anspruch 12, wobei mindestens eine der mehreren ersten Leiterplatten (810) eine Kontakteinheit (830) umfasst, die elektrisch mit den Elektrodenlaschen (710) verbunden ist.

## Revendications

1. Batterie (200), comprenant :
un boîtier de batterie (201) en forme d'anneau, qui comprend une pluralité d'espaces physiquement séparés par une pluralité de cloisons (240) ; et
un ensemble d'électrode (301 ; 401) ayant une structure formée en empilant une pluralité de plaques d'électrode logées dans au moins un espace de la pluralité d'espaces du boîtier de batterie (201),
dans lequel l'ensemble d'électrode (301 ; 401) comprend des pattes d'électrode (510 ; 610 ; 710) tirées à travers au moins l'une de la pluralité de cloisons (240) le long d'une surface à l'intérieur du boîtier de batterie (201) vers un autre espace adjacent à au moins l'un espace dans lequel l'ensemble d'électrode (301 ; 401) est logé.

2. Batterie (200) selon la revendication 1, dans laquelle le boîtier de batterie (201) comprend en outre un couvercle (250) configuré pour recouvrir au moins l'un premier espace dans lequel l'ensemble d'électrode (301 ; 401) est logé.

3. Batterie (200) selon la revendication 2, dans laquelle le boîtier de batterie (201) est formé d'un matériau à base d'acier inoxydable.

4. Batterie (200) selon la revendication 1, dans laquelle les pattes d'électrode (510 ; 610 ; 710) comprennent au moins une patte d'électrode positive et au moins une patte d'électrode négative.

5. Batterie (200) selon la revendication 4, dans laquelle les pattes d'électrode (510 ; 610 ; 710) sont tirées à travers une cloison identique parmi la pluralité de cloisons (240), et s'étendent le long d'une surface d'une partie interne à l'intérieur du boîtier de batterie (201).

6. Batterie (200) selon la revendication 4, dans laquelle les pattes d'électrode (510 ; 610 ; 710) sont tirées à travers une cloison identique parmi la pluralité de cloisons (240), et s'étendent le long d'une surface d'une partie externe à l'intérieur du boîtier de batterie (201).

7. Batterie (200) selon la revendication 4, dans laquelle au moins l'une patte d'électrode positive et au moins l'une patte d'électrode négative parmi les pattes d'électrode (510 ; 610 ; 710) sont tirées à travers des cloisons (240) différentes parmi la pluralité de cloisons (240), respectivement, et s'étendent le long d'une surface d'une partie interne à l'intérieur du boîtier de batterie (201).

8. Batterie (200) selon la revendication 4, dans laquelle au moins l'une patte d'électrode positive et au moins l'une patte d'électrode négative parmi les pattes d'électrode (510 ; 610 ; 710) sont tirées à travers des cloisons (240) différentes parmi la pluralité de cloisons (240), respectivement, et s'étendent le long d'une surface d'une partie externe à l'intérieur du boîtier de batterie (201).

9. Batterie (200) selon la revendication 1, dans laquelle au moins l'un espace dans lequel l'ensemble d'électrode (301 ; 401) est logé présente une taille sensiblement identique à celle de l'autre espace adjacent à au moins l'un l'espace dans lequel l'ensemble d'électrode (301 ; 401) est logé.

10. Batterie (200) selon la revendication 1, dans laquelle au moins l'un espace dans lequel l'ensemble d'électrode (301 ; 401) est logé présente une taille différente de celle de l'autre espace adjacent à au moins l'un l'espace dans lequel l'ensemble d'électrode (301 ; 401) est logé.

11. Dispositif électronique (101) comprenant la batterie (200) selon l'une quelconque des revendications 1 à 10, et comprenant en outre
une unité de circuit (801),
dans lequel l'ensemble d'électrode (301 ; 401) est connecté électriquement à l'unité de circuit (801) par l'intermédiaire des pattes d'électrode (710) tirées vers l'autre espace.

12. Dispositif électronique (101) selon la revendication 11, dans lequel l'unité de circuit (801) comprend une pluralité de premières cartes de circuit imprimé (810), et un ou plusieurs secondes cartes de circuit imprimé flexibles (820) configurées pour connecter la pluralité de premières cartes de circuit imprimé (810).

13. Dispositif électronique (101) selon la revendication 12, dans lequel au moins l'une de la pluralité de premières cartes de circuit imprimé (810) comprend une unité de contact (830) connectée électriquement aux pattes d'électrode (710).
